# EUROPEAN PATENT APPLICATION

(11) **EP 4 284 052 A1**
(43) Date of publication of application: **29.11.2023**
(21) Application number: 21921041.6
(22) Date of filing: 22.01.2021
(51) Int. Cl.: H04W 16/26, H04W 24/10, H04W 72/04

(54) **TERMINAL, WIRELESS COMMUNICATION METHOD, AND BASE STATION**

(71) Applicant: NTT DOCOMO, INC., Tokyo 100-6150 (JP)
(72) Inventor: MATSUMURA, Yuki, Tokyo 100-6150 (JP); NAGATA, Satoshi, Tokyo 100-6150 (JP); WANG, Jing, Beijing 100190 (CN); CHEN, Lan, Beijing 100190 (CN)
(74) Representative: Hoffmann Eitle
(86) International application number: PCT/JP2021/002261
(87) International publication number: WO 2022/157932

(57) **Abstract**

A terminal according to one aspect of the present disclosure includes: a receiving section that receives, when joint channel status information reporting is applied, configuration information corresponding to both an application of channel measurement resources for multiple transmission/reception points and an application of channel measurement resources for single transmission/reception point; and a control section that controls transmission of a channel state information reporting based on the configuration information. According to one aspect of the present disclosure, it is possible to appropriately perform measurement and report of CSI for multi-panel/TRP.

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

In existing LTE systems (for example, 3GPP Rel. 8 to Rel. 14), a user terminal (User Equipment (UE)) transmits uplink control information (UCI) by using at least one of a UL data channel (for example, a Physical Uplink Shared Channel (PUSCH)) and a UL control channel (for example, a Physical Uplink Control Channel (PUCCH)).

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

For NR, it is studied that one or a plurality of transmission/reception points (TRPs) (multi-TRP) perform DL transmission (for example, PDSCH transmission) to a user terminal (User Equipment (UE)) by using one or a plurality of panels (multi-panel).

However, in previous NR specifications such as Rel. 15, multi-panel/TRP is not taken into account, and hence it is not clear how to perform measurement and report of CSI in a case of using multi-panel/TRP. Unless measurement and report of CSI is appropriately performed, system performance may degrade, for example, throughput may decrease.

Thus, an object of the present disclosure is to provide a terminal, a radio communication method, and a base station that can appropriately perform measurement and report of CSI for multi-panel/TRP.

### Solution to Problem

A terminal according to one aspect of the present disclosure includes: a receiving section that receives, when joint channel status information reporting is applied, configuration information corresponding to both an application of channel measurement resources for multiple transmission/reception points and an application of channel measurement resources for single transmission/reception point; and a control section that controls transmission of a channel state information reporting based on the configuration information. Advantageous Effects of Invention

According to one aspect of the present disclosure, it is possible to appropriately perform measurement and report of CSI for multi-panel/TRP.

### Brief Description of Drawings

[FIG. 1] FIG. 1 is a diagram to show a CSI report configuration (CSI-ReportConfig) in 3GPP Rel. 16.
[FIG. 2] FIG. 2 is a diagram to show a first example of a CSI report configuration according to an implicit IMR configuration.
[FIG. 3] FIG. 3 is a diagram to show a second example of the CSI report configuration according to the implicit IMR configuration.
[FIG. 4] FIG. 4 is a diagram to show a relationship between CMRs and CSI-IMs in Option 1-1 of a first embodiment.
[FIG. 5] FIG. 5 is a diagram to show a relationship of CSI pairs, ZP-IMRs, and NZP-IMRs in Option 1-1 of the first embodiment.
[FIG. 6] FIG. 6 is a diagram to show a relationship between CMRs and CSI-IMs in Option 1-2 of the first embodiment.
[FIG. 7] FIG. 7 is a diagram to show a relationship of CSI pairs, ZP-IMRs, and NZP-IMRs in Option 1-2 of the first embodiment.
[FIG. 8] FIG. 8 is a diagram to show a relationship between CMRs and CSI-IMs in Option 1-3 of the first embodiment.
[FIG. 9] FIG. 9 is a diagram to show a relationship of CSI pairs, ZP-IMRs, and NZP-IMRs in Option 1-3 of the first embodiment.
[FIG. 10] FIG. 10 is a diagram to show a relationship between CMRs and CSI-IMs in Option 1-4 of the first embodiment.
[FIG. 11] FIG. 11 is a diagram to show a relationship of CSI pairs, ZP-IMRs, and NZP-IMRs in Option 1-4 of the first embodiment.
[FIG. 12] FIG. 12 is a diagram to show a relationship of CMRs, CSI-IMs, and NZP-IMs in Option 2-1 of a second embodiment.
[FIG. 13] FIG. 13 is a diagram to show a relationship of CSI pairs, ZP-IMRs, and NZP-IMRs in Option 2-1 of the second embodiment.
[FIG. 14] FIG. 14 is a diagram to show a relationship between CMRs and CSI-IMs in Option 2-2 of the second embodiment.
[FIG. 15] FIG. 15 is a diagram to show a relationship of CSI pairs, ZP-IMRs, and NZP-IMRs in Option 2-2 of the second embodiment.
[FIG. 16] FIG. 16 is a diagram to show a relationship between CMRs and CSI-IMs in Option 2-3 of the second embodiment.
[FIG. 17] FIG. 17 is a diagram to show a relationship of CSI pairs, ZP-IMRs, and NZP-IMRs in Option 2-3 of the second embodiment.
[FIG. 18] FIG. 18 is a diagram to show a relationship between CMRs and CSI-IMs in Option 2-4 of the second embodiment.
[FIG. 19] FIG. 19 is a diagram to show a relationship of CSI pairs, ZP-IMRs, and NZP-IMRs in Option 2-4 of the second embodiment.
[FIG. 20] FIG. 20 is a diagram to show a configuration example of CMRs in Option 3-1-1 of the third embodiment.
[FIG. 21] FIG. 21 is a diagram to show a configuration example of CMRs in Option 3-1-2 of the third embodiment.
[FIG. 22] FIG. 22 is a diagram to show a configuration example of CMRs/CSI-IMs in Option 3-2-1 of the third embodiment.
[FIG. 23] FIG. 23 is a diagram to show a configuration example of CMRs/CSI-IMs in Option 3-2-2 of the third embodiment.
[FIG. 24] FIG. 24 is a diagram to show a first configuration example of CMRs in Option 4-1-1 of the fourth embodiment.
[FIG. 25] FIG. 25 is a diagram to show a second configuration of CMRs in Option 4-1-1 of the fourth embodiment.
[FIG. 26] FIG. 26 is a diagram to show a first configuration example of CMRs in Option 4-1-2 of the fourth embodiment.
[FIG. 27] FIG. 27 is a diagram to show a second configuration example of CMRs in Option 4-1-2 of the fourth embodiment.
[FIG. 28] FIG. 28 is a diagram to show a configuration example of CMRs/CSI-IMs in Option 4-2-1 of the fourth embodiment.
[FIG. 29] FIG. 29 is a diagram to show a configuration example of CMRs/CSI-IMs in Option 4-2-2 of the fourth embodiment.
[FIG. 30] FIG. 30 is a diagram to show an example of a schematic structure of a radio communication system according to one embodiment.
[FIG. 31] FIG. 31 is a diagram to show an example of a structure of a base station according to one embodiment.
[FIG. 32] FIG. 32 is a diagram to show an example of a structure of a user terminal according to one embodiment.
[FIG. 33] FIG. 33 is a diagram to show an example of a hardware structure of the base station and the user terminal according to one embodiment.

### Description of Embodiments

### (CSI Report (or Reporting))

In Rel-15 NR, a terminal (also referred to as a user terminal, a User Equipment (UE), and the like) generates (also referred to as determines, calculated, estimates, measures, and the like) channel state information (CSI), based on a reference signal (RS) (or a resource for the RS), and transmits (also referred to as reports, feeds back, and the like) the generated CSI to a network (for example, a base station). The CSI may be transmitted to the base station by using an uplink control channel (for example, a Physical Uplink Control Channel (PUCCH)) or an uplink shared channel (for example, Physical Uplink Shared Channel (PUSCH)), for example.

The RS used for the generation of the CSI may be at least one of a channel state information reference signal (CSI-RS), a synchronization signal / broadcast channel (Synchronization Signal / Physical Broadcast Channel (SS/PBCH)) block, a synchronization signal (SS), a demodulation reference signal (DMRS), and the like, for example.

The CSI-RS may include at least one of a non-zero power (Non Zero Power (NZP)) CSI-RS and CSI-Interference Management (CSI-IM). The SS/PBCH block is a block including the SS and the PBCH (and a corresponding DMRS), and may be referred to as an SS block (SSB) or the like. The SS may include at least one of a primary synchronization signal (PSS) and a secondary synchronization signal (SSS).

Note that the CSI may include at least one of a channel quality indicator (CQI), a precoding matrix indicator (PMI), a CSI-RS resource indicator (CRI), an SS/PBCH block resource indicator (SSBRI), a layer indicator (LI), a rank indicator (RI), L1-RSRP (reference signal received power in Layer 1) (Layer 1 Reference Signal Received Power), L1-RSRQ (Reference Signal Received Quality), an L1-SINR (Signal to Interference plus Noise Ratio), an L1-SNR (Signal to Noise Ratio), and the like.

The UE may receive information related to CSI report (report configuration information) and control the CSI report, based on the report configuration information. The report configuration information may be a radio resource control (RRC) information element (IE) "CSI-ReportConfig," for example. Note that, in the present disclosure, the RRC IE may be interchangeably interpreted as an RRC parameter, a higher layer parameter, and the like.

The report configuration information (for example, the RRC IE "CSI-ReportConfig") may include at least one of the following, for example.
- Information (report type information, for example, an RRC IE "reportConfigType") related to a type of the CSI report
- Information (report quantity information, for example, an RRC IE "reportQuantity") related to one or more quantities (one or more CSI parameters) of the CSI to be reported
- Information (resource information, for example, an RRC IE "CSI-ResourceConfigId") related to the resource for the RS used for generation of the quantity (the CSI parameter)
- Information (frequency domain information, for example, an RRC IE "reportFreqConfiguration") related to the frequency domain being a target of the CSI report

For example, the report type information may indicate a periodic CSI (P-CSI) report, an aperiodic CSI (A-CSI) report, or a semi-persistent CSI report (Semi-Persistent CSI (SP-CSI)) report.

The report quality information may specify at least one combination of the CSI parameters (for example, the CRI, RI, PMI, CQI, LI, L1-RSRP, and the like).

The resource information may be an ID of the resource for the RS. The resource for the RS may include, for example, a non-zero power CSI-RS resource or SSB, and a CSI-IM resource (for example, a zero power CSI-RS resource).

The frequency domain information may indicate the frequency granularity of the CSI report. The frequency granularity may include, for example, a wideband and a subband. The wideband is the entire CSI reporting band. The wideband may be the entire certain carrier (component carrier (CC), cell, or serving cell) or may be the entire bandwidth part (BWP) in a certain carrier, for example. The wideband may be interpreted as CSI reporting band, the entire CSI reporting band, and the like.

The subband may be part of the wideband and constituted of one or more resource blocks (RBs) or physical resource blocks (PRBs). The size of the subband may be determined according to the size of the BWP (the number of PRBs).

The frequency domain information may indicate which one of the PMIs of the wideband and the subband is to be reported (the frequency domain information may include an RRC IE *"pmi-FormatIndicator"* to be used to determine which one of wideband PMI reporting and subband PMI reporting, for example). The UE may determine the frequency granularity of the CSI report (in other words, which one of the wideband PMI reporting and subband PMI reporting), based on at least one of the report quantity information and the frequency domain information.

When the wideband PMI reporting is configured (determined), one wideband PMI may be reported for the entire CSI reporting band. In contrast, when the subband PMI reporting is configured, a single wideband indication ii may be reported for the entire CSI reporting band, while one subband indication i₂ for each of one or more subbands in the entire CSI report (for example, subband indication of each subband) may be reported.

The UE performs channel estimation by using the received RS to estimate a channel matrix H. The UE feeds back an index (PMI) determined based on the estimated channel matrix.

The PMI may indicate a precoder matrix (also simply referred to as a precoder) that the UE considers appropriate for the use for downlink (DL) transmission to the UE. Each value of the PMI may correspond to one precoder matrix. A set of values of the PMI may correspond to a different set of precoder matrices referred to as a precoder codebook (also simply referred to as a codebook).

In a space domain, a CSI report may include one or more types of CSI. For example, the CSI may include at least one of a first type (Type 1 CSI) to be used for selection of single beam and a second type (Type 2 CSI) to be used for selection of multi-beam. The single beam may be interpreted as a single layer, and the multi-beam may be interpreted as a plurality of beams. Type 1 CSI need not necessarily assume multi-user multiple input multiple outpiut (MIMO) while Type 2 CSI may assume multi-user MIMO.

The codebook may include a codebook for Type 1 CSI (also referred to as a Type 1 codebook and the like) and a codebook for Type 2 CSI (also referred to as a Type 2 codebook and the like). The Type 1 CSI may include Type 1 single panel CSI and Type 1 multi-panel CSI, and different codebooks (Type 1 single panel codebook and Type 1 multi-panel codebook) may be defined for Type 1 single panel CSI and Type 1 multi-panel CSI.

In the present disclosure, Type 1 and Type I may be interchangeably interpreted. In the present disclosure, Type 2 and Type II may be interchangeably interpreted.

An uplink control information (UCI) type may include at least one of Hybrid Automatic Repeat reQuest ACKnowledgement (HARQ-ACK), scheduling request (SR), and CSI. The UCI may be carried on a PUCCH or may be carried on a PUSCH.

In Rel-15 NR, the UCI can include one CSI part for wideband PMI feedback. CSI report #n includes, if being reported, PMI wideband information.

In Rel-15 NR, the UCI can include two CSI parts for subband PMI feedback. A CSI part 1 includes wideband PMI information. A CSI part 2 includes one piece of wideband PMI information and some pieces of subband PMI information. The CSI part 1 and the CSI part 2 are separated and coded.

In Rel-15 NR, the UE is configured with N (N ≥ 1) report settings for a CSI report configuration and M (M ≥ 1) resource settings for a CSI resource configuration by a higher layer. For example, the CSI report configuration (CSI-ReportConfig) includes resource setting for channel measurement (resourcesForChannelMeasurement), CSI-IM resource setting for interference (csi-IM-ResourceForInterference), NZP-CSI-RS setting for interference (nzp-CSI-RS-ResourceForInterference), report quantity (reportQuantity), and the like. Each of the resource setting for channel measurement, the CSI-IM resource setting for interference, and the NZP-CSI-RS setting for interference is associated with a CSI resource configuration (CSI-ResourceConfig, CSI-ResourceConfigId). The CSI resource configuration includes a list of CSI-RS resource sets (csi-RS-ResourceSetList, for example, an NZP-CSI-RS resource set or a CSI-IM resource set).

To enable more dynamic channel/interference hypotheses for NCJT by targeting both FR1 and FR2, evaluation and definition of CSI report for transmission of at least one of DL multi-TRP and multi-panel are studied.

### (Multi-TRP)

For NR, it is studied that one or a plurality of transmission/reception points (TRPs) (multi-TRP (MTRP)) perform DL transmission to a UE by using one or a plurality of panels (multi-panel). It is also studied that the UE performs UL transmission to the one or plurality of TRPs by using one or a plurality of panels.

Note that the plurality of TRPs may correspond to the same cell identifier (ID) or may correspond to different cell IDs. The cell ID(s) may be a physical cell ID or a virtual cell ID.

The multi-TRP (TRPs #1 and #2) may be connected via an ideal/non-ideal backhaul to exchange information, data, and the like. Each TRP of the multi-TRP may transmit a different codeword (Code Word (CW)) and a different layer. As a mode of multi-TRP transmission, non-coherent joint transmission (NCJT) may be employed.

In NCJT, for example, TRP 1 performs modulation mapping on a first codeword, performs layer mapping, and transmits a first PDSCH in layers of a first number (for example, two layers) by using first precoding. TRP 2 performs modulation mapping on a second codeword, performs layer mapping, and transmits a second PDSCH in layers of a second number (for example, two layers) by using second precoding.

Note that a plurality of PDSCHs (multi-PDSCH) transmitted by NCJT may be defined to partially or entirely overlap in terms of at least one of the time and frequency domains. In other words, the first PDSCH from a first TRP and the second PDSCH from a second TRP may overlap in terms of at least one of the time and frequency resources.

The first PDSCH and the second PDSCH may be assumed not to be in a quasi-co-location (QCL) relationship (not to be quasi-co-located). Reception of the multi-PDSCH may be interpreted as simultaneous reception of PDSCHs of a QCL type other than a certain QCL type (for example, QCL type D).

A plurality of PDSCHs (which may be referred to as multi-PDSCH (multiple PDSCHs)) from the multi-TRP may be scheduled by using one piece of DCI (single DCI (S-DCI), single PDCCH) (single master mode). One piece of DCI may be transmitted from one TRP of the multi-TRP. A plurality of PDSCHs from the multi-TRP may be separately scheduled by using a plurality of pieces of DCI (multi-DCI (M-DCI), multi-PDCCH (multiple PDCCHs)) (multi-master mode). The plurality of pieces of DCI may be transmitted from respective multi-TRP. The UE may assume to transmit, to different TRPs, separate CSI reports related to the respective TRPs. Such CSI feedback may be referred to as separate feedback, separate CSI feedback, and the like. In the present disclosure, "separate" may be interpreted as "independent" and vice versa.

Note that CSI feedback for transmitting CSI reports related to both of the TRPs may be used for one of the TRPs. Such CSI feedback may be referred to as joint feedback, joint CSI feedback, and the like.

For example, in a case of the separate feedback, the UE is configured to transmit, to TRP #1, a CSI report for TRP #1 by using a certain PUCCH (PUCCH 1) while transmitting, to TRP #2, a CSI report for TRP #2 by using another PUCCH (PUCCH 2). In a case of the joint feedback, the UE transmits, to TRPs #1 and #2, the CSI report for TRP #1 and the CSI report for TRP #2.

According to such a multi-TRP scenario, more flexible transmission control using a channel with high quality is possible.

It is not clear, for multi-TRP transmission, how to measure and report pieces of CSI for a plurality of different TRPs in consideration that pieces of CSI for the plurality of different TRPs are normally different from each other. A channel/interference hypothesis for one TRP changes depending on determination of transmission of peripheral TRPs (traffic).

For example, a CSI report for separate feedback (which may be referred to as a separate CSI report) may be configured by using one CSI report configuration (CSI-ReportConfig) associated with one TRP.

The CSI report configuration may correspond to one interference hypothesis for one TRP (in other words, a different CSI report configuration may be used for each TRP and for each interference hypothesis). The CSI report configuration may correspond to a plurality of interference hypotheses for one TRP (in other words, a different CSI report configuration may be used for each TRP, and one CSI report configuration may be associated with a plurality of interference hypotheses for a certain TRP).

For example, a CSI report for joint feedback (which may be referred to as a joint CSI report) may be configured by using one CSI report configuration (CSI-ReportConfig) associated with a plurality of TRPs.

The CSI report configuration may correspond to one interference hypothesis for each of the plurality of TRPs (specifically, a CSI report including CSI for interference hypothesis #1 for TRP #1 and CSI for interference hypothesis #1 for TRP #2 may be configured by using a certain CSI report configuration, and a CSI report including CSI for interference hypothesis #2 for TRP #1 and CSI for interference hypothesis #1 for TRP #2 may be configured by using another CSI report configuration). The CSI report configuration may correspond to a plurality of interference hypotheses for each of the plurality of TRPs (specifically, a CSI report including two pieces of CSI for interference hypotheses #1 and #2 for TRP #1 and two pieces of CSI for interference hypotheses #3 and #4 for TRP #2 may be configured by using one CSI report configuration).

Note that the CSI report configuration for the joint CSI report may include a resource configuration for each TRP (at least one of resource setting for channel measurement, CSI-IM resource setting for interference, and NZP-CSI-RS setting for interference). A resource configuration for a certain TRP may be included and configured in a resource configuration group (resource setting group).

Note that the resource configuration group may be identified by a configured resource configuration group index. The resource configuration group may be interpreted as a report group and vice versa. The resource configuration group index (which may simply be referred to as a group index) may indicate a CSI report related to a TRP (to which TRP a certain CSI report (a CSI report configuration, CSI resource configuration, CSI-RS resource set, CSI-RS resource, TCI state, QCL, or the like) corresponds). For example, group index #i may correspond to TRP #i.

The CSI report configuration for the separate CSI report may be referred to as a separate CSI report configuration, a separate CSI configuration, and the like. The CSI report configuration for the joint CSI report may be referred to as a joint CSI report configuration, a joint CSI configuration, and the like.

For MTRP, it is preferable that single TRP (STRP) transmission and MTRP transmission be dynamically switched according to a channel state and the like. To enable this, CSI as the following examples is desired:
- CSI for TRP 1 (first TRP) assuming STRP transmission (also referred to as CSI_A below),
- CSI for TRP 2 (second TRP) assuming STRP transmission (also referred to as CSI_B below),
- CSI for TRP 1 in consideration of inter-TRP/beam interference from TRP 2 assuming NCJT transmission by MTRP (also referred to as CSI_C below), and
- CSI for TRP 2 in consideration of inter-TRP/beam interference from TRP 1 assuming NCJT transmission by MTRP (also referred to as CSI_D below).

### <CMR and IMR>

When interference measurement is performed in a CSI-IM, CSI-RS resources of channel measurement are associated with CSI-IM resources in resource units according to the ordering of the CSI-RS resources and the CSI-IM resources in a corresponding resource set. The number of CSI-RS resources for channel measurement may be the same as the number of CSI-IM resources.

In a case of ZP-CSI-RS based interference measurement, a CSI-RS resource (CMR) for channel measurement and a CSI-RS resource (IMR) for interference measurement are associated with each other for each resource. In other words, the CMR and the IMR have one-to-one mapping.

When K_{S} (> 1) resources are configured in a corresponding resource set for channel measurement, the UE need derive a CSI parameter other than the CRI with a condition of the reported CRI. CRI k (k ≥ 0) corresponds to a (k + 1)-th configured entry of related nzp-CSI-RSResource in corresponding nzp-CSI-RS-ResourceSet for channel measurement and corresponds to a (k + 1)-th configured entry of related csi-IM-Resource in corresponding csi-IM-ResourceSet (if configured).

In other words, CRI k (k ≥ 0) corresponds to a (k + 1)-th configured CMR and (k + 1)-th configured IMR.

### <Aperiodic CSI>

In a case of aperiodic CSI, each trigger state configured by using a higher layer parameter "CSI-AperiodicTriggerState" is associated with one or a plurality of CSI report configurations (CSI-ReportConfig). Each CSI report configuration is linked to periodic, semi-persistent, or aperiodic resource setting.

In a case where one resource configuration is configured, the resource configuration (given by a higher layer parameter resourcesForChannelMeasurement) is for channel measurement for L1-RSRP or L1-SINR calculation.

In a case where two resource configurations are configured, the first resource configuration (given by a higher layer parameter resourcesForChannelMeasurement) is for channel measurement, and the second resource configuration (given by a higher layer parameter csi-IM-ResourcesForInterference or nzp-CSI-RS-ResourcesForInterference) is for interference measurement performed in a CSI-IM or NZP-CSI-RS.

In a case where three resource configurations are configured, the first resource configuration (given by a higher layer parameter resourcesForChannelMeasurement) is for channel measurement, the second resource configuration (given by a higher layer parameter csi-IM-ResourcesForInterference) is for CSI-IM based interference measurement, and the third resource configuration (given by a higher layer parameter nzp-CSI-RS-ResourcesForInterference) is for NZP-CSI-RS based interference measurement.

In a case where aperiodic CSI is applied, NR may support interference measurement based on only a ZP-CSI-RS, only an NZP-CSI-RS, and a ZP-CSI-RS and an NZP-CSI-RS.

### <Periodic or Semi-persistent CSI>

In a case where periodic or semi-persistent CSI is applied, each CSI report configuration (CSI-ReportConfig) is linked to periodic or semi-persistent resource setting.

In a case where one resource configuration (given by a higher layer parameter resourcesForChannelMeasurement) is configured, the resource configuration is for channel measurement for L1-RSRP calculation.

In a case where two resource configurations are configured, the first resource configuration (given by a higher layer parameter resourcesForChannelMeasurement) is for channel measurement, and the second resource configuration (given by a higher layer parameter csi-IM-ResourcesForInterference) is for interference measurement performed in a

### CSI-IM.

In a case where periodic or semi-persistent CSI is applied, NR may support only interference measurement based on a ZP-CSI-RS.

### <CSI-IM Resource and CSI-RS Resource>

A CSI-IM resource for interference measurement, an NZP-CSI-RS resource for interference measurement, and an NZP-CSI-RS resource for channel measurement are configured by a higher layer signaling for one or more CSI resource configurations for channel and interference measurement.

The UE may assume that an NZP-CSI-RS resource for channel measurement and a CSI-IM resource for interference measurement configured for one CSI report are QCLed for each resource in relation to "QCL-TypeD." When an NZP-CSI-RS resource is used for interference measurement, the UE may assume that an NZP-CSI-RS resource for channel measurement and a CSI-IM resource or an NZP-CSI-RS resource for interference measurement configured for one CSI report are QCLed in relation to "QCL-TypeD."

In other words, when ZP-CSI-RS based interference measurement is applied, the UE may assume that the same receive beam as that indicated by the base station (gNB) for channel measurement is used for interference measurement.

### <CSI Report Configuration>

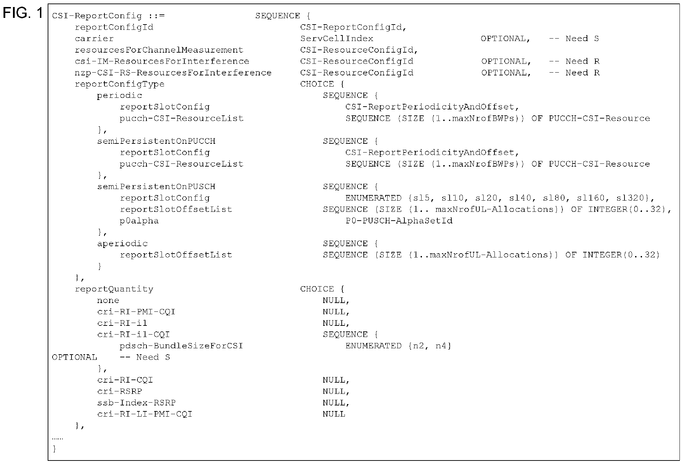

FIG. 1 is a diagram to show a CSI report configuration (CSI-ReportConfig) in 3GPP Rel. 16. As shown in FIG. 1, as a CSI report configuration being an RRC information element, resourcesForChannelMeasurement (CMR), csi-IM-ResourcesForInterference (ZP-IMR), nzp-CSI-RS-ResourcesForInterference (NZP-IMR), reportConfigType, and the like are configured. reportConfigType includes periodic, semiPersistentOnPUCCH, semiPersistentOnPUSCH, and aperiodic.

### <Implicit IMR Configuration>

For joint CSI report, a CMR for a certain CSI (TRP) may correspond to an IMR for another CSI (TRP). With this configuration, it is expected that two pieces of CSI included in a joint CSI report for NCJT transmission fit well with actual inter-TRP interference (sufficiently accurate for direct scheduling). In addition, performance of further CSI update is not required by network implementation.

The UE may assume that no explicit IMR configuration is made for inter-TRP interference for a certain CSI report configuration (joint CSI configuration). In this case, in a specification, an additional IMR assumption may be defined for a case where a joint CSI configuration is configured.

For example, in a joint CSI configuration, it may be assumed that a CMR for a certain TRP (resource specified by resourcesForChannelMeasurement) is included in (or the same as) an additional NZP-IMR for another TRP (CMR) in addition to or instead of an explicit ZP-IMR/NZP-IMR. Here, the additional NZP-IMR for another TRP is not explicitly configured.

Information related to the additional NZP-IMR may be defined in advance by a specification, or the UE may be notified of the information by using at least one of RRC, a MAC CE, and DCI.

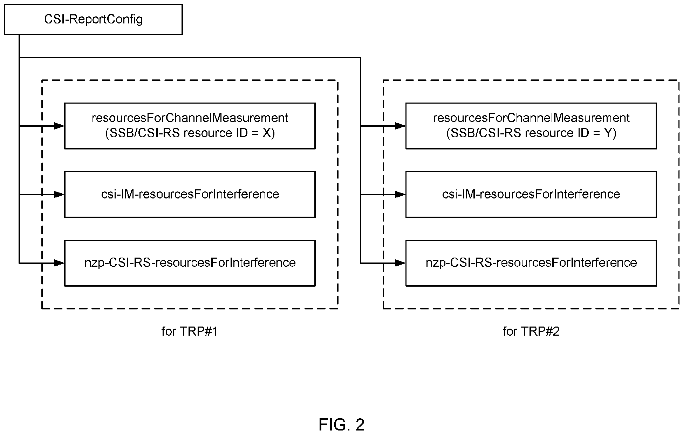

FIG. 2 is a diagram to show a first example of a CSI report configuration according to an implicit IMR configuration. In FIG. 2, SSB / CSI-RS ID = Y for an NZP-IMR for TRP #1 is not explicitly configured, and SSB / CSI-RS ID = X for an NZP-IMR for TRP #2 is not explicitly configured

Even when there is no explicit NZP-IMR configuration, the UE may assume that SSB / CSI-RS ID = Y corresponding to the CMR for TRP #2 corresponds to the NZP-IMR for TRP #1, and SSB / CSI-RS ID = X corresponding to the CMR for TRP #1 corresponds to the NZP-IMR for TRP #2. The UE may carry out channel/interference measurement or the like, based on these assumptions and perform joint CSI report.

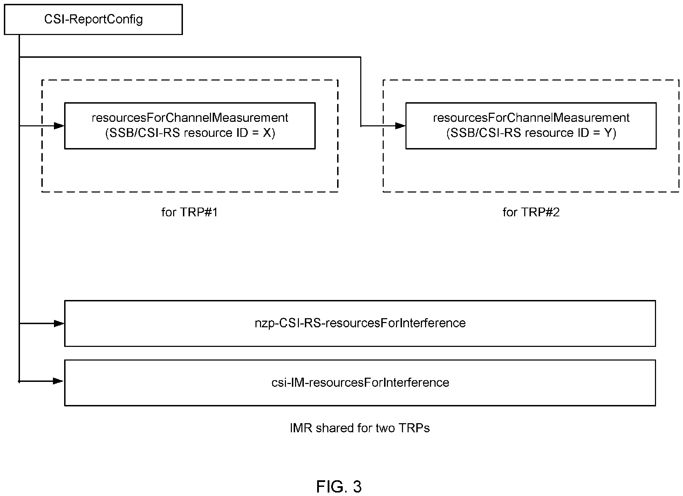

FIG. 3 is a diagram to show a second example of a CSI report configuration according to an implicit IMR configuration. Since FIG. 3 is similar to FIG. 2, overlapping description will not be given. FIG. 3 is different from FIG. 2 in that a ZP-IMR and an NZP-IMR are commonly configured in (so as to be shared by) two TRPs.

The UE may use the NZP-IMR commonly configured and SSB / CSI-RS ID = Y corresponding to the CMR for TRP #2 as NZP-IMRs for TRP #1. The UE may use the NZP-IMR commonly configured and SSB / CSI-RS ID = X corresponding to the CMR for TRP #1 as NZP-IMRs for TRP #2.

However, in previous NR specifications such as Rel. 15, multi-panel/TRP is not taken into account, and hence it is not clear how to perform measurement and reporting of CSI in a case of using multi-panel/TRP. In addition, it is not clear how to perform joint of measurement/reporting in multi-panel/TRP hypothesis and measurement/reporting in single-panel/TRP hypothesis.

Unless measurement and report of CSI is appropriately performed, system performance may degrade, for example, throughput may decrease. Thus, the inventors of the present invention came up with an idea of a method for appropriately performing measurement and report of CSI for multi-panel/TRP.

Embodiments according to the present disclosure will be described in detail with reference to the drawings as follows. The radio communication methods according to respective embodiments may each be employed individually, or may be employed in combination.

In the present disclosure, "A/B" and "at least one of A and B" may be interchangeably interpreted.

In the present disclosure, a panel, an Uplink (UL) transmission entity, a TRP, a spatial relation, a control resource set (CORESET), a PDSCH, a codeword, a base station, an antenna port for a certain signal (for example, a demodulation reference signal (DMRS) port), an antenna port group for a certain signal (for example, a DMRS port group), a group for multiplexing (for example, a code division multiplexing (CDM) group, a reference signal group, or a CORESET group), a CORESET pool, a CW, a redundancy version (RV), and a layer (MIMO layer, transmission layer, spatial layer) may be interchangeably interpreted. A panel Identifier (ID) and a panel may be interchangeably interpreted. In the present disclosure, a TRP ID and a TRP may be interchangeably interpreted.

In the present disclosure, NCJT, NCJT using multi-TRP, multi-PDSCH using NCJT, multi-PDSCH, a plurality of PDSCHs from multi-TRP, and the like may be interchangeably interpreted. Note that multi-PDSCH may mean a plurality of PDSCHs with time resources at least partially overlapping (for example, one symbol), mean a plurality of PDSCHs with all time resources overlapping (for example, all symbols), mean a plurality of PDSCHs with no time resources overlapping, mean a plurality of PDSCHs carrying the same TB or the same CW, or mean a plurality of PDSCHs to which different UE beams (spatial domain reception filter, QCL parameter) are applied.

In the present disclosure, standard (normal) TRP, single TRP, S-TRP, single TRP system, single TRP transmission, single PDSCH may be interchangeably interpreted. In the present disclosure, multi-TRP, MTRP, multi-TRP system, multi-TRP transmission, multi PDSCH may be interchangeably interpreted. In the present disclosure, single DCI, single PDCCH, single DCI based multi-TRP, two TCI states on at least one TCI code point are activated may be interchangeably interpreted.

In the present disclosure, single TRP, channel using single TRP, channel using one TCI state/space relation, RRC/DCI does not enable multi-TRP, RRC/DCI does not enable multiple TCI states/spatial relations, no CORESET pool index (CORESETPoolIndex) value of 1 is configured for any CORESET and no codepoint in TCI field is mapped to two TCI states, to communicate with one transmission/reception point, to apply single TRP may be interchangeably interpreted.

In the present disclosure, CRI index, CRI reporting index, reported CRI index may be interchangeably interpreted.

In the present disclosure, an index, an ID, an indicator, a resource ID, and the like may be interchangeably interpreted. In the present disclosure, a beam, TCI, a TCI state, a DL TCI state, a UL TCI state, a unified TCI state, QCL, a QCL assumption, a spatial relation, spatial relation information, a precoder, and the like may be interchangeably interpreted.

In the present disclosure, resource setting for channel measurement, a resource for channel measurement, a CSI-RS resource for channel measurement, resourcesForChannelMeasurement, a CMR, and a CMR resource may be interchangeably interpreted.

In the present disclosure, a CSI-IM, a CSI-IM resource, a ZP-IMR, a ZP-IMR resource, a ZP-CSI-RS, a ZP-CSI-RS resource, CSI-IM resource setting for interference, a resource for CSI-IM based interference measurement, csi-IM-ResourceForInterference, a resource for interference measurement, and a CSI-RS resource for interference measurement may be interchangeably interpreted.

In the present disclosure, an NZP-IM, an NZP-IM resource (NZP-IMR), an NZP-IMR resource, an NZP-CSI-RS, an NZP-CSI-RS resource, NZP-CSI-RS resource setting for interference, a resource for NZP-CSI-RS based interference measurement, nzp-CSI-RS-ResourcesForInterference, a resource for interference measurement, and a CSI-RS resource for interference measurement may be interchangeably interpreted.

In the present disclosure, a CSI report, a CSI report configuration, a CSI configuration, a resource configuration, resource setting, and the like may be interchangeably interpreted. In the present disclosure, "support," "control," "controllable," "operate," "operable," "perform," "performable," and the like may be interchangeably interpreted.

### (Radio Communication Method)

A UE may determine a first resource for interference measurement (ZP-IMR/NZP-IMR) corresponding to a first transmission/reception point (TRP) or a second resource for interference measurement (ZP-IMR/NZP-IMR) corresponding to a second transmission/reception point (TRP), based on at least one of a first resource for channel measurement (CMR) corresponding to the first TRP and a second resource for channel measurement (CMR) corresponding to the second TRP. The UE may then transmit a channel state information (CSI) report, based on the first CMR and the second CMR.

The UE may transmit a report of a CSI pair including the first CMR and the second CMR corresponding to the same resource for interference measurement (ZP-IMR/NZP-IMR).

The first TRP corresponds to TRP #1 to be described below, and the second TRP corresponds to TRP #2 to be described below. The first CMR corresponds to at least one of CMRs #0 to #3 to be described below, and the second CMR corresponds to at least one of CMRs #4 to #7 to be described below. The first resource for interference measurement corresponds to at least one of CSI-IMs (ZP-IMRs) #a to #d or at least one of NZP-IMs #A to #D to be described below. The second resource for interference measurement corresponds to at least one of CSI-IMs (ZP-IMRs) #e to #h or at least one of NZP-IMs #E to #H to be described below, for example. In the present disclosure, "first" and "second" may be interchangeably interpreted.

In the present disclosure, "A (or B) corresponds to / is related to B (or A)," the "UE assumes/determines A (or B) as B (or A)," and the "UE assumes/determines B (or A), based on A (or B)" may be interchangeably interpreted.

### <First Embodiment>

In a case of periodic or semi-persistent CSI, NR may support only interference measurement based on a ZP-CSI-RS. When a specific (new) RRC parameter is configured, the UE may assume the CMR for another TRP as the NZP-IMR for a first TRP and assume the CMR for the first TRP as the NZP-IMR for the other TRP. When the specific (new) RRC parameter is not configured, the UE may perform interference measurement based on only a ZP-IMR (CSI-IM).

In other words, when a specific higher layer parameter (RRC parameter) is configured, the UE may determine the first resource for interference measurement of non-zero power (NZP-IMR), based on the second CMR.

### {Option 1-1}

In a CMR configuration, N CMR (SSB/NZP-CSI-RS) resources may be configured at maximum for each TRP. Hence, in a CSI report configuration for CMRs (resourcesForChannelMeasurement) in an MTRP NCJT CSI configuration, 2N CMRs in total may be configured at maximum.

In a CSI-IM configuration, N ZP-CSI-RS resources in total may be configured at maximum, and two TRPs may share the ZP-CSI-RS resources.

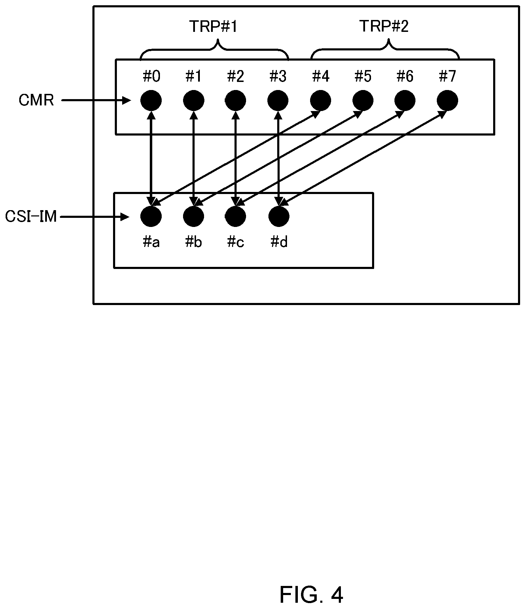

FIG. 4 is a diagram to show a relationship between CMRs and CSI-IMs in Option 1-1 of a first embodiment. As shown in FIG. 4, four CMRs are configured at maximum for each of TRP #1 and TRP #2. CMRs #0 and #4 correspond to CSI-IM #a, CMRs #1 and #5 correspond to CSI-IM #b, CMRs #2 and #6 correspond to CSI-IM #c, and CMRs #3 and #7 correspond to CSI-IM #d.

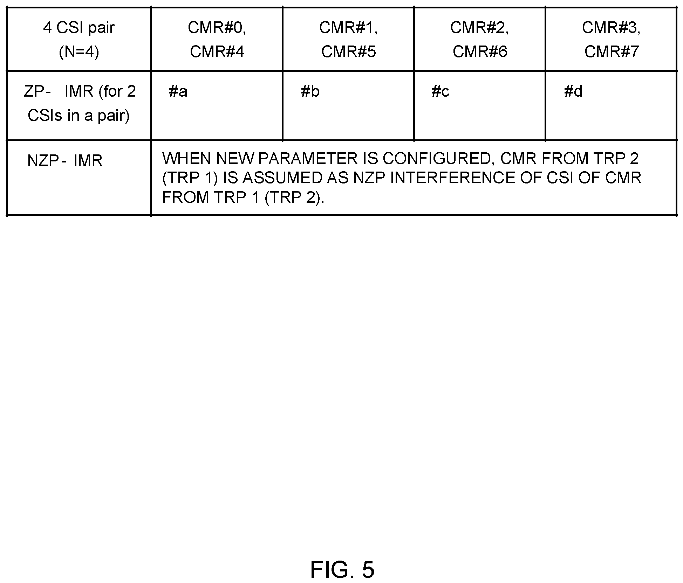

FIG. 5 is a diagram to show a relationship of CSI pairs, ZP-IMRs, and NZP-IMRs in Option 1-1 of the first embodiment. FIG. 5 corresponds to FIG. 4. As shown in FIG. 5, CMRs corresponding to the same ZP-IMR (CSI-IM) and different TRPs are configured as a CSI pair. The ZP-IMRs and the NZP-IMRs are assumed to be configurations within a CSI report configuration (this similarly applies to other drawings).

The UE measures N pairs of pieces of CSI from two TRPs in an NCJT assumption. Each pair includes the k-th CMR associated with each TRP (for example, the k-th CMR and the (k + N)-th CMR are included as a pair). For the two pieces of CSI of each pair, the UE may assume one-to-one mapping between a CMR and a CSI-IM associated with each TRP.

After the measurement of each pair, the UE may report one (or a plurality of) CSI pair selected for report among the pairs. The UE may determine the pair(s) / the number of pairs to report, based on a specification or a configuration by RRC or the like. The UE may transmit, for the selected CSI pair(s), a CSI report including a CRI indicated in Options 1-1-1 and 1-1-2 below.

{{Option 1-1-1}} Two CRIs (CRI j and CRI j + N) may correspond to two pieces of CSI including one CSI based on the configured (j + 1)-th CMR and (j + 1)-th CSI-IM and another CSI based on the configured (j + 1 + N)-th CMR and (j + 1)-th CSI-IM.

{{Option 1-1-2}} One CRI (CRI j) may correspond to two pieces of CSI including one CSI based on the configured (j + 1)-th CMR and (j + 1)-th CSI-IM and another CSI based on the configured (j + 1 + N)-th CMR and (j + 1)-th CSI-IM. In Option 1-1-2, one CRI (CRI j) means two CRIs to report CRI j and CRI j + N.

Preferable beam pairs may be reported by a group-based beam report. In this case, since preferable beam pairs are narrowed down, only N pairs are configured as in Option 1-1 to thereby simplify processing. In this case, a base station (gNB) may have a configuration to acquire pieces of CSI of reported beam pairs.

### {Option 1-2}

In a CMR configuration, N CMR (SSB/NZP-CSI-RS) resources may be configured at maximum for each TRP. Hence, in a CSI report configuration for CMRs (resourcesForChannelMeasurement) in an MTRP NCJT CSI configuration, 2N CMRs in total may be configured at maximum.

In a CSI-IM configuration, N ZP-CSI-RS resources in total may be configured at maximum, and two TRPs may share the ZP-CSI-RS resources.

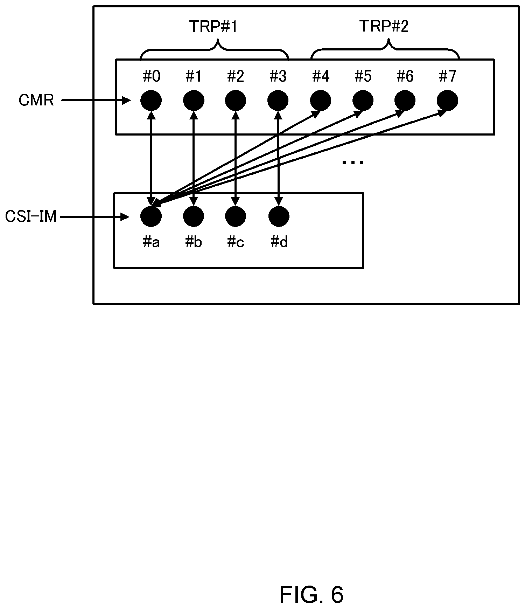

FIG. 6 is a diagram to show a relationship between CMRs and CSI-IMs in Option 1-2 of the first embodiment. As shown in FIG. 6, four CMRs are configured at maximum for each of TRP #1 and TRP #2. CMRs #0 and #4 to #7 correspond to CSI-IM #a, CMRs #1 and #4 to #7 correspond to CSI-IM #b, CMRs #2 and #4 to #7 correspond to CSI-IM #c, and CMRs #3 and #4 to #7 correspond to CSI-IM #d. Note that part of the correspondence is omitted in the drawing.

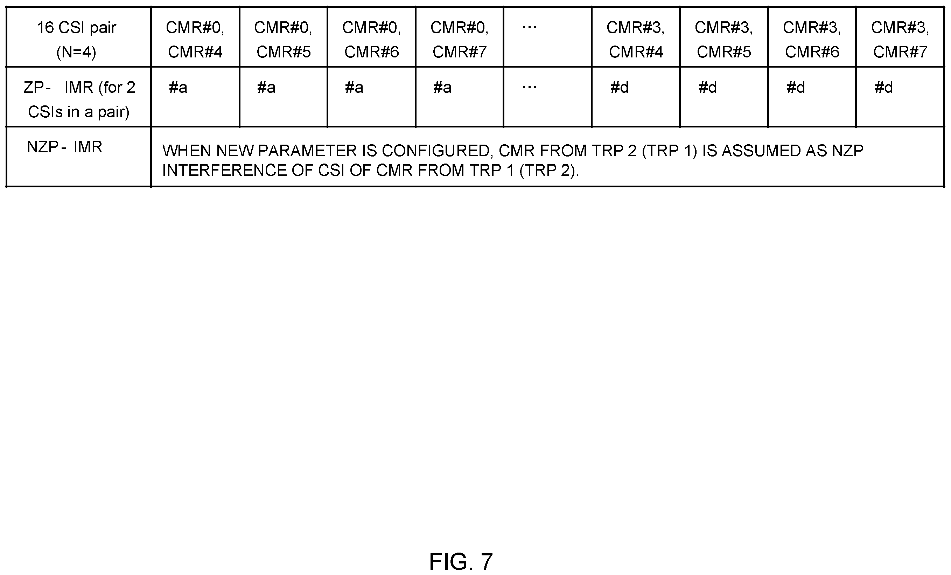

FIG. 7 is a diagram to show a relationship of CSI pairs, ZP-IMRs, and NZP-IMRs in Option 1-2 of the first embodiment. FIG. 7 corresponds to FIG. 6. As shown in FIG. 7, CMRs corresponding to the same ZP-IMR (CSI-IM) and different TRPs are configured as a CSI pair. The example in FIG. 7 is different from the example in FIG. 5 in that the number of pairs is N x N.

The UE measures the pieces of CSI of N x N pairs from two TRPs in an NCJT assumption. Each pair includes CMRs associated with all the conceivable combinations of TRPs. For the two pieces of CSI of each pair, the UE assumes the k-th CSI-IM for interference measurement for the CSI pair including the k-th CMR.

For one CSI pair selected for report, the UE may report two CRIs (CRI j (j ≥ 0) and CRI p (p ≥ N)). These two CRIs may correspond to two pieces of CSI including one CSI based on the configured (j + 1)-th CMR and (j + 1)-th CSI-IM and another CSI based on the configured p-th CMR and (j + 1)-th CSI-IM.

### {Option 1-3}

In a CMR configuration, N CMR (SSB/NZP-CSI-RS) resources may be configured at maximum for each TRP. Hence, in a CSI report configuration for CMRs in an MTRP NCJT CSI configuration, 2N CMRs in total may be configured at maximum.

In a CSI-IM configuration, N ZP-CSI-RS resources may be configured at maximum for each TRP. Hence, in a CSI report configuration for ZP-IMRs in an MTRP NCJT CSI configuration, 2N ZP-CSI-RS resources in total may be configured at maximum.

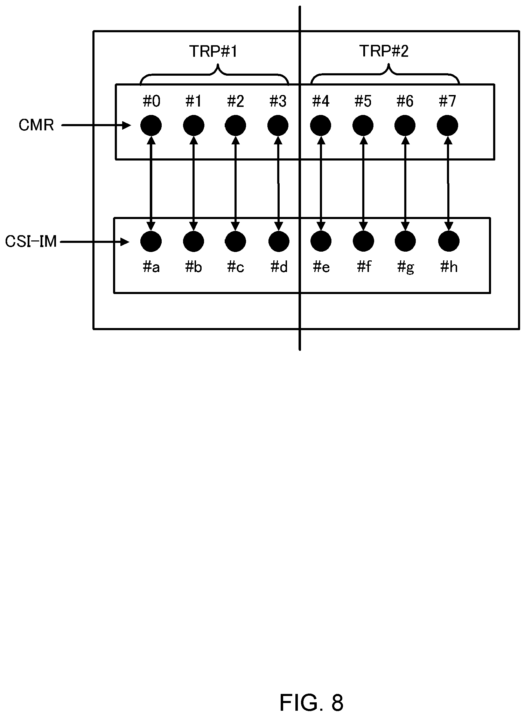

FIG. 8 is a diagram to show a relationship between CMRs and CSI-IMs in Option 1-3 of the first embodiment. As shown in FIG. 8, four CMRs are configured at maximum for each of TRP #1 and TRP #2. CMRs #0 to #7 have one-to-one correspondence with CSI-IMs #a to #h.

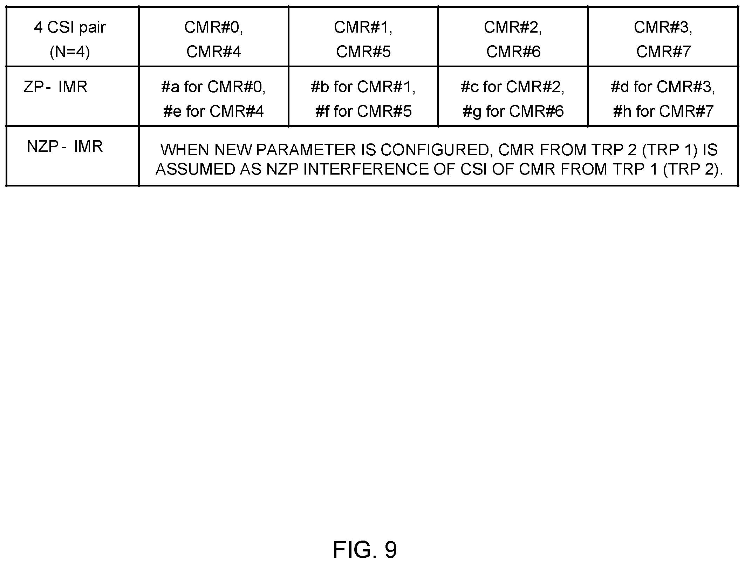

FIG. 9 is a diagram to show a relationship of CSI pairs, ZP-IMRs, and NZP-IMRs in Option 1-3 of the first embodiment. FIG. 9 corresponds to FIG. 8. FIG. 9 is different from FIG. 5 in that the number of ZP-IMRs (CSI-IMs) for one CSI pair is two.

The UE measures N pairs of pieces of CSI from two TRPs in an NCJT assumption. Each pair includes the k-th CMR associated with each TRP (for example, the k-th CMR and the (k + N)-th CMR are included as a pair). For the two pieces of CSI of each pair, the UE may assume one-to-one mapping between a CMR and a CSI-IM.

After the measurement of each pair, the UE may report one or a plurality of CSI pairs selected for report among the pairs. The UE may determine the pair(s) / the number of pairs to report, based on a specification or a configuration by RRC or the like. The UE may transmit, for the selected CSI pair(s), a CSI report including CRIs indicated in Option 1-3-1 and 1-3-2 below.

{{Option 1-3-1}} Two CRIs (CRI j and CRI j + N) may correspond to two pieces of CSI including one CSI based on the configured (j + 1)-th CMR and (j + 1)-th CSI-IM and another CSI based on the configured (j + 1 + N)-th CMR and (j + 1 + N)-th CSI-IM.

{{Option 1-3-2}} One CRI (CRI j) may correspond to two pieces of CSI including one CSI based on the configured (j + 1)-th CMR and (j + 1)-th CSI-IM and another CSI based on the configured (j + 1 + N)-th CMR and (j + 1 + N)-th CSI-IM. In Option 1-3-2, one CRI (CRI j) means two CRIs to report CRI j and CRI j + N.

### {Option 1-4}

In a CMR configuration, N CMRs (SSBs/NZP-CSI-RSs) may be configured at maximum for each TRP. Hence, in a CSI report configuration for CMRs (resourcesForChannelMeasurement) in an MTRP NCJT CSI configuration, 2N CMRs in total may be configured at maximum.

In a CSI-IM configuration, N ZP-CSI-RS resources may be configured at maximum for each TRP. Hence, in a CSI report configuration for ZP-IMRs in an MTRP NCJT CSI configuration, 2N ZP-CSI-RS resources in total may be configured at maximum.

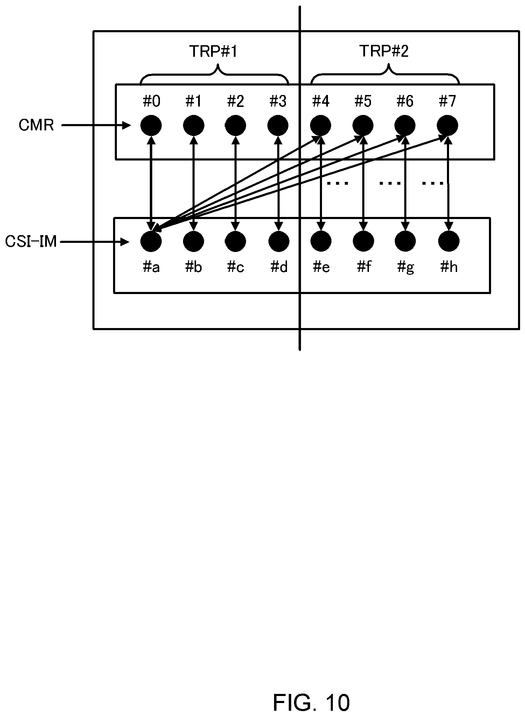

FIG. 10 is a diagram to show a relationship between CMRs and CSI-IMs in Option 1-4 of the first embodiment. As shown in FIG. 10, four CMRs are configured at maximum for each of TRP #1 and TRP #2. CMRs #0 and #4 to #7 correspond to CSI-IM #a, CMRs #1 and #4 to #7 correspond to CSI-IM #b, CMRs #2 and #4 to #7 correspond to CSI-IM #c, and CMRs #3 and #4 to #7 correspond to CSI-IM #d. Furthermore, CMRs #4 to #7 have one-to-one correspondence with CSI-IMs #e to #h. Note that part of the correspondence is omitted in the drawing.

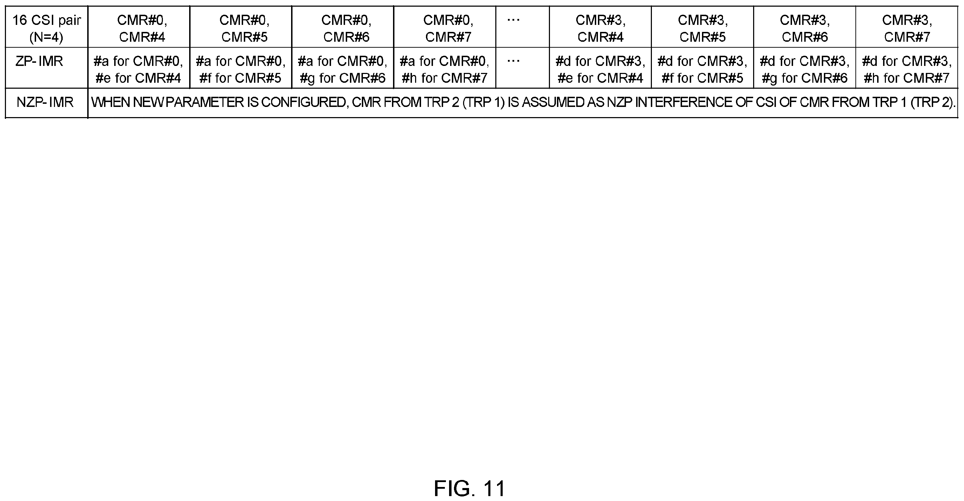

FIG. 11 is a diagram to show a relationship of CSI pairs, ZP-IMRs, and NZP-IMRs in Option 1-4 of the first embodiment. FIG. 11 corresponds to FIG. 10. As shown in FIG. 11, CMRs corresponding to the same ZP-IMR (CSI-IM) are configured as a CSI pair. FIG. 11 is different from FIG. 7 in that the number of ZP-IMRs (CSI-IMs) for one CSI pair is two.

The UE measures the pieces of CSI of N x N pairs from two TRPs in an NCJT assumption. Each pair includes CMRs associated with all the conceivable combinations of TRPs. For the two pieces of CSI of each pair, the UE assumes the k-th CSI-IM for interference measurement for the k-th CMR.

For one CSI pair selected for report, the UE may report two CRIs (CRI j (j ≥ 0) and CRI p (p ≥ N)). These two CRIs may correspond to two pieces of CSI including one CSI based on the configured (j + 1)-th CMR and (j + 1)-th CSI-IM and another CSI based on the configured p-th CMR and p-th CSI-IM.

According to the first embodiment, mapping between CMRs and ZP-IMRs/NZP-IMRs for two TRPs is made clear for CSI measurement related to a CSI report configuration for NCJT in a case of periodic and semi-persistent CSI.

### <Second Embodiment>

In a case of aperiodic CSI, NR may support interference measurement based on only a ZP-CSI-RS, only an NZP-CSI-RS, and both a ZP-CSI-RS and an NZP-CSI-RS. In aperiodic CSI, when interference measurement is configured based on only a ZP-CSI-RS, the method of each option of the first embodiment may be applied.

In aperiodic CSI, when interference measurement is configured based on only a ZP-CSI-RS or both a ZP-CSI-RS and an NZP-CSI-RS, any one of Aspects 1 to 3 below may be applied.

### {Aspect 1}

For two pieces of CSI as a CSI pair, the UE does not assume the CMR of one TRP as the NZP-IMR of another TRP.

### {Aspect 2}

For two pieces of CSI as a CSI pair, when an indication is made by a specific (new) RRC parameter, the UE assumes the CMR of one TRP as the NZP-IMR of another TRP.

### {Aspect 3}

For two pieces of CSI as a CSI pair of aperiodic CSI, when an indication is made by a specific (new) RRC parameter to assume the CMR of one TRP as the NZP-IMR for another TRP, the UE does not assume that an NZP-CSI-RS for interference measurement is configured.

In Aspects 1 to 3, at least one of Options 2-1 to 2-4 to be described below may be applied to mapping between CMRs and CSI-IMs/NZP-CSI-RSs (NZP-IMRs). A major difference between Options 2-1 to 2-4 and Options 1-1 to 1-4 is that an NZP-CSI-RS for interference measurement (NZP-IMR) is taken into account.

### {Option 2-1}

In a CMR configuration, N CMR (SSB/NZP-CSI-RS) resources may be configured at maximum for each TRP. Hence, in a CSI report configuration for CMRs (resourcesForChannelMeasurement) in an MTRP NCJT CSI configuration, 2N CMRs in total may be configured at maximum.

In a CSI-IM configuration, N ZP-CSI-RS resources in total may be configured at maximum, and two TRPs may share the ZP-CSI-RS resources.

For an NZP-CSI-RS for interference measurement, N NZP-CSI-RS resources in total may be configured at maximum, and two TRPs may share the NZP-CSI-RS resources.

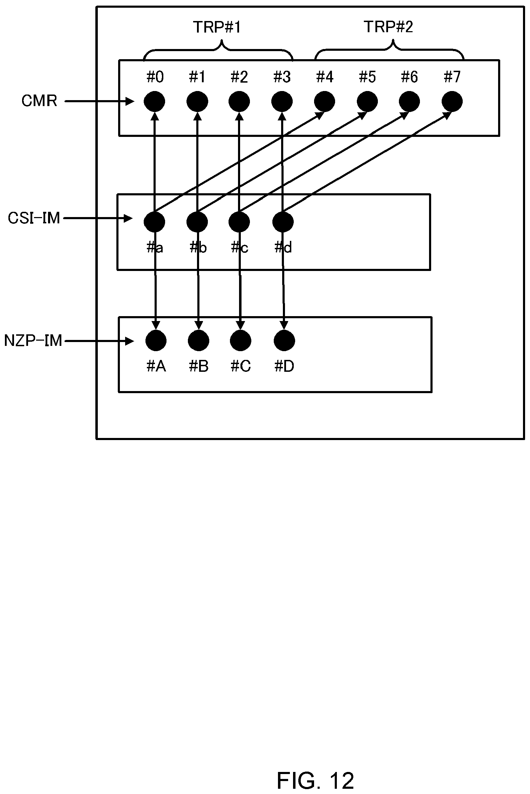

FIG. 12 is a diagram to show a relationship of CMRs, CSI-IMs, and NZP-IMs in Option 2-1 of a second embodiment. As shown in FIG. 12, four CMRs are configured at maximum for each of TRP #1 and TRP #2. CMRs #0 and #4 correspond to CSI-IM #a and NZP-IM #A, CMRs #1 and #5 correspond to CSI-IM #b and NZP-IM #B, CMRs #2 and #6 correspond to CSI-IM #c and NZP-IM #C, and CMRs #3 and #7 correspond to CSI-IM #d and NZP-IM #D.

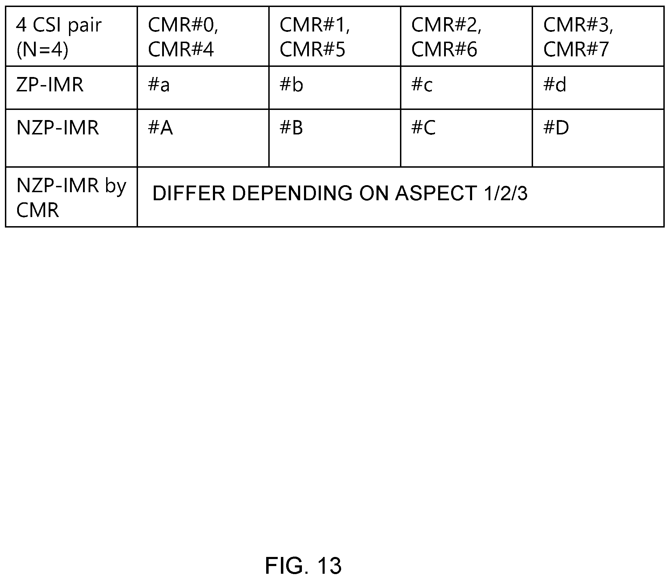

FIG. 13 is a diagram to show a relationship of CSI pairs, ZP-IMRs, and NZP-IMRs in Option 2-1 of the second embodiment. FIG. 13 corresponds to FIG. 12. As shown in FIG. 13, CMRs corresponding to the same ZP-IMR (CSI-IM) and NZP-IM and different TRPs are configured as a CSI pair. The ZP-IMRs and the NZP-IMR are assumed to be configurations within a CSI report configuration (this similarly applies to other drawings). The ZP-IMRs and the NZP-IMR are assumed to be configurations within a CSI report configuration (this similarly applies to other drawings). An NZP-IMR by CMR is an NZP-IMR assumed by using a CMR and differs depending on which one of Aspects 1 to 3 described above is applied (this similarly applies to other drawings).

The UE measures N pairs of pieces of CSI from two TRPs in an NCJT assumption. Each pair includes the k-th CMR associated with each TRP (for example, the k-th CMR and the (k + N)-th CMR are included as a pair). For the two pieces of CSI of each pair, the UE may assume one-to-one mapping between a CMR and a CSI-IM/NZP-CSI-RS associated with each TRP.

After the measurement of each pair, the UE may report one or a plurality of CSI pairs selected for report among the pairs. The UE may determine the pair(s) / the number of pairs to report, based on a specification or a configuration by RRC or the like. The UE may transmit, for the selected CSI pair(s), a CSI report including a CRI indicated in Options 2-1-1 and 2-1-2 below.

{{Option 2-1-1}} Two CRIs (CRI j and CRI j + N) may correspond to two pieces of CSI including one CSI based on the configured (j + 1)-th CMR and (j + 1)-th CSI-IM/NZP-IM and another CSI based on the configured (j + 1 + N)-th CMR and (j + 1)-th CSI-IM/NZP-IM.

{{Option 2-1-2}} One CRI (CRI j) may correspond to two pieces of CSI including one CSI based on the configured (j + 1)-th CMR and (j + 1)-th CSI-IM/NZP-IM and another CSI based on the configured (j + 1 + N)-th CMR and (j + 1)-th CSI-IM/NZP-IM. In Option 1-1-2, one CRI (CRI j) means two CRIs to report CRI j and CRI j + N.

Preferable beam pairs may be reported by a group-based beam report. In this case, since preferable beam pairs are narrowed down, only N pairs are configured as in Option 2-1 to thereby simplify processing. In this case, a base station (gNB) may have a configuration to acquire pieces of CSI of reported beam pairs.

### {Option 2-2}

In a CMR configuration, N CMR (SSB/NZP-CSI-RS) resources may be configured at maximum for each TRP. Hence, in a CSI report configuration for CMRs (resourcesForChannelMeasurement) in an MTRP NCJT CSI configuration, 2N CMRs in total may be configured at maximum.

In a CSI-IM configuration, N ZP-CSI-RS resources in total may be configured at maximum, and two TRPs may share the ZP-CSI-RS resources.

For an NZP-CSI-RS for interference measurement, N NZP-CSI-RS resources in total may be configured at maximum, and two TRPs may share the NZP-CSI-RS resources.

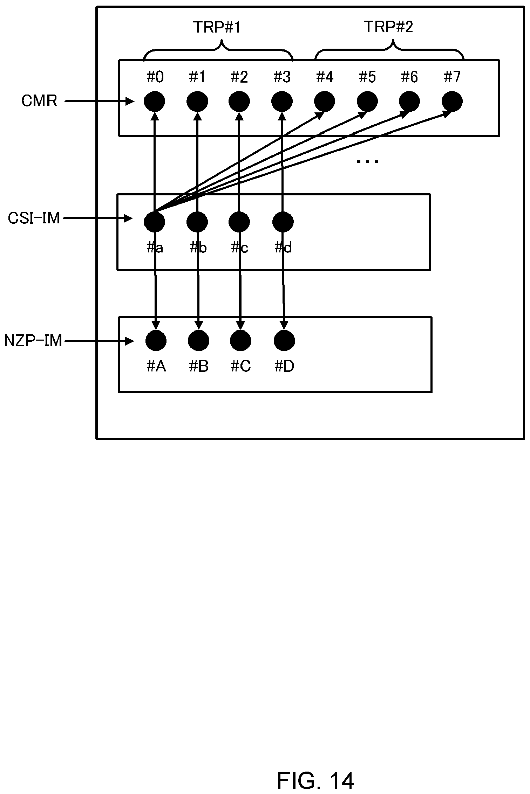

FIG. 14 is a diagram to show a relationship between CMRs and CSI-IMs in Option 2-2 of the second embodiment. As shown in FIG. 14, four CMRs are configured at maximum for each of TRP #1 and TRP #2. CMRs #0 and #4 to #7 correspond to CSI-IM #a and NZP-IM #A, CMRs #1 and #4 to #7 correspond to CSI-IM #b and NZP-IM #B, CMRs #2 and #4 to #7 correspond to CSI-IM #c and NZP-IM #C, and CMRs #3 and #4 to #7 correspond to CSI-IM #d and NZP-IM #D. Note that part of the correspondence is omitted in the drawing.

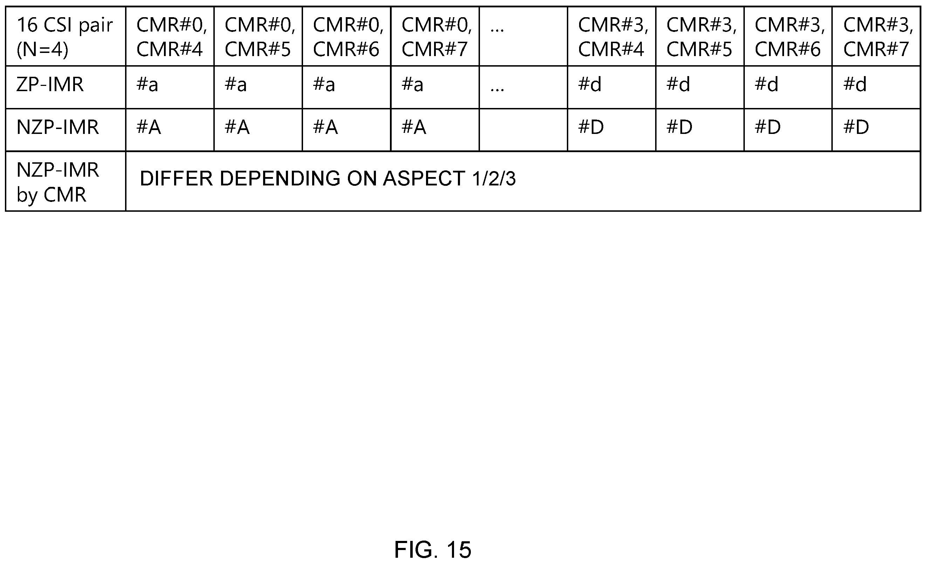

FIG. 15 is a diagram to show a relationship of CSI pairs, ZP-IMRs, and NZP-IMRs in Option 2-2 of the second embodiment. FIG. 15 corresponds to FIG. 14. As shown in FIG. 15, CMRs corresponding to the same ZP-IMR (CSI-IM) and NZP-IM and different TRPs are configured as a CSI pair. The example in FIG. 15 is different from the example in FIG. 13 in that the number of pairs is N x N. An "NZP-IMR by CMR" differs depending on which one of Aspects 1 to 3 described above is applied.

The UE measures the pieces of CSI N x N pairs from two TRPs in an NCJT assumption. Each pair includes CMRs associated with all the conceivable combinations of TRPs. For the two pieces of CSI of each pair, the UE assumes the k-th CSI-IM and the k-th NZP-IM for interference measurement for the CSI pair including the k-th CMR.

For one CSI pair selected for report, the UE may report two CRIs (CRI j (j ≥ 0) and CRI p (p ≥ N)). These two CRIs may correspond to two pieces of CSI including one CSI based on the configured (j + 1)-th CMR and (j + 1)-th CSI-IM/NZP-IM and another CSI based on the configured p-th CMR and (j + 1)-th CSI-IM/NZP-IM.

### {Option 2-3}

In a CMR configuration, N CMRs (SSBs/NZP-CSI-RSs) may be configured at maximum for each TRP. Hence, in a CSI report configuration for CMRs in an MTRP NCJT CSI configuration, 2N CMRs in total may be configured at maximum.

In a CSI-IM configuration, N ZP-CSI-RS resources may be configured at maximum for each TRP. Hence, in a CSI report configuration for ZP-IMRs in an MTRP NCJT CSI configuration, 2N ZP-CSI-RS resources in total may be configured at maximum.

In an NZP-IM configuration, N NZP-CSI-RS resources may be configured at maximum for each TRP. Hence, in a CSI report configuration for NZP-IMRs in an MTRP NCJT CSI configuration, 2N NZP-CSI-RS resources in total may be configured at maximum.

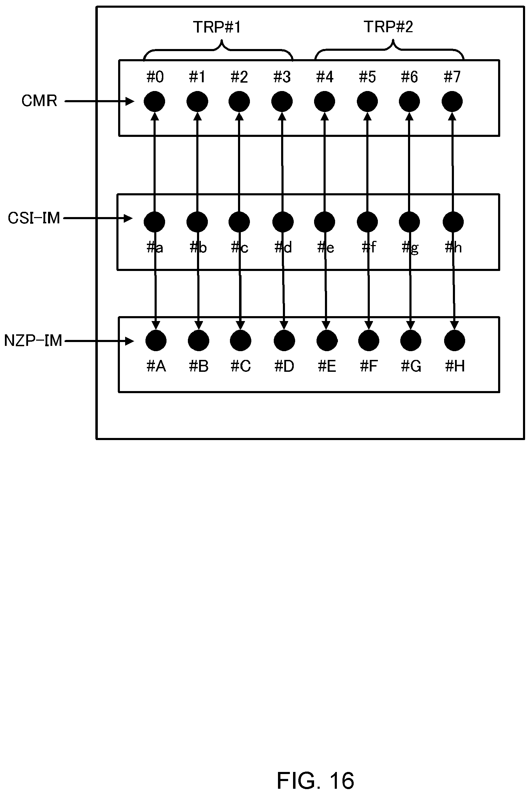

FIG. 16 is a diagram to show a relationship between CMRs and CSI-IMs in Option 2-3 of the second embodiment. As shown in FIG. 16, four CMRs are configured at maximum for each of TRP #1 and TRP #2. CMRs #0 to #7 have one-to-one correspondence with CSI-IMs #a to #h and NZP-IMs #A to #H.

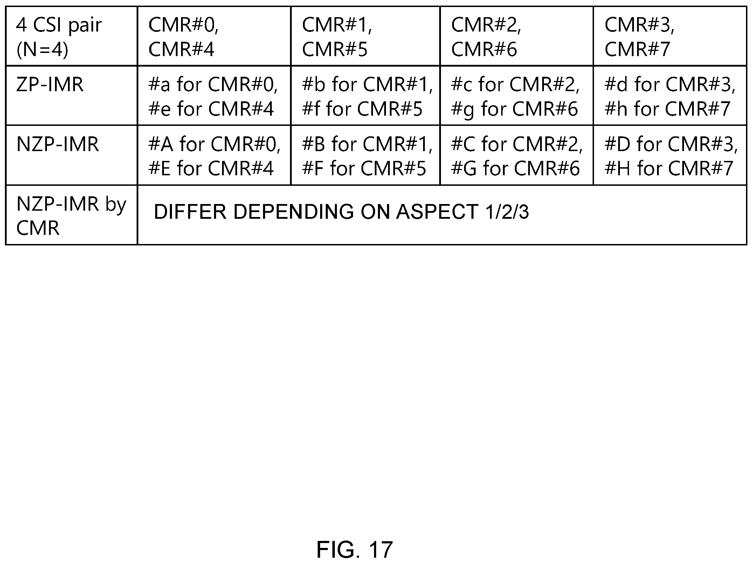

FIG. 17 is a diagram to show a relationship of CSI pairs, ZP-IMRs, and NZP-IMRs in Option 2-3 of the second embodiment. FIG. 17 corresponds to FIG. 16. FIG. 17 is different from FIG. 13 in that the numbers of ZP-IMRs (CSI-IMs) and NZP-IMs for one CSI pair are two.

The UE measures N pairs of pieces of CSI from two TRPs in an NCJT assumption. Each pair includes the k-th CMR associated with each TRP (for example, the k-th CMR and the (k + N)-th CMR are included as a pair). For the two pieces of CSI of each pair, the UE may assume one-to-one mapping between a CMR and a CSI-IM/NZP-IM (NZP-CSI-RS for IM).

After the measurement of each pair, the UE may report one or a plurality of CSI pairs selected for report among the pairs. The UE may determine the pair(s) / the number of pairs to report, based on a specification or a configuration by RRC or the like. The UE may transmit, for the selected CSI pair(s), a CSI report including CRIs indicated in Option 2-3-1 and 2-3-2 below.

{{Option 2-3-1}} Two CRIs (CRI j and CRI j + N) may correspond to two pieces of CSI including one CSI based on the configured (j + 1)-th CMR and (j + 1)-th CSI-IM/NZP-IM and another CSI based on the configured (j + 1 + N)-th CMR and (j + 1 + N)-th CSI-IM/NZP-IM.

{{Option 2-3-2}} One CRI (CRI j) may correspond to two pieces of CSI including one CSI based on the configured (j + 1)-th CMR and (j + 1)-th CSI-IM/NZP-IM and another CSI based on the configured (j + 1 + N)-th CMR and (j + 1 + N)-th CSI-IM/NZP-IM. In Option 1-3-2, one CRI (CRI j) means two CRIs to report CRI j and CRI j + N.

### {Option 2-4}

In a CMR configuration, N CMR (SSB/NZP-CSI-RS) resources may be configured at maximum for each TRP. Hence, in a CSI report configuration for CMRs (resourcesForChannelMeasurement) in an MTRP NCJT CSI configuration, 2N CMRs in total may be present at maximum.

In a CSI-IM configuration, N ZP-CSI-RS resources may be configured at maximum for each TRP. Hence, in a CSI report configuration for ZP-IMRs in an MTRP NCJT CSI configuration, 2N ZP-CSI-RS resources in total may be configured at maximum.

In an NZP-IM configuration, N NZP-CSI-RS resources may be configured at maximum for each TRP. Hence, in a CSI report configuration for NZP-IMRs in an MTRP NCJT CSI configuration, 2N NZP-CSI-RS resources in total may be configured at maximum.

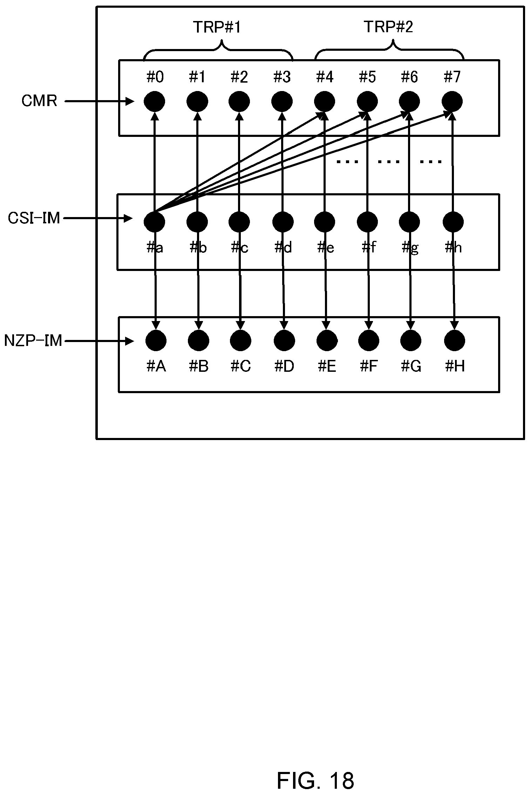

FIG. 18 is a diagram to show a relationship between CMRs and CSI-IMs in Option 2-4 of the second embodiment. As shown in FIG. 18, four CMRs are configured at maximum for each of TRP #1 and TRP #2. CMRs #0 and #4 to #7 correspond to CSI-IM #a and NZP-IM #A, CMRs #1 and #4 to #7 correspond to CSI-IM #b and NZP-IM #B, CMRs #2 and #4 to #7 correspond to CSI-IM #c and NZP-IM #C, and CMRs #3 and #4 to #7 correspond to CSI-IM #d and NZP-IM #D. Furthermore, CMRs #4 to #7 have one-to-one correspondence with CSI-IMs #e to #h and NZP-IMs #A to #H. Note that part of the correspondence is omitted in the drawing.

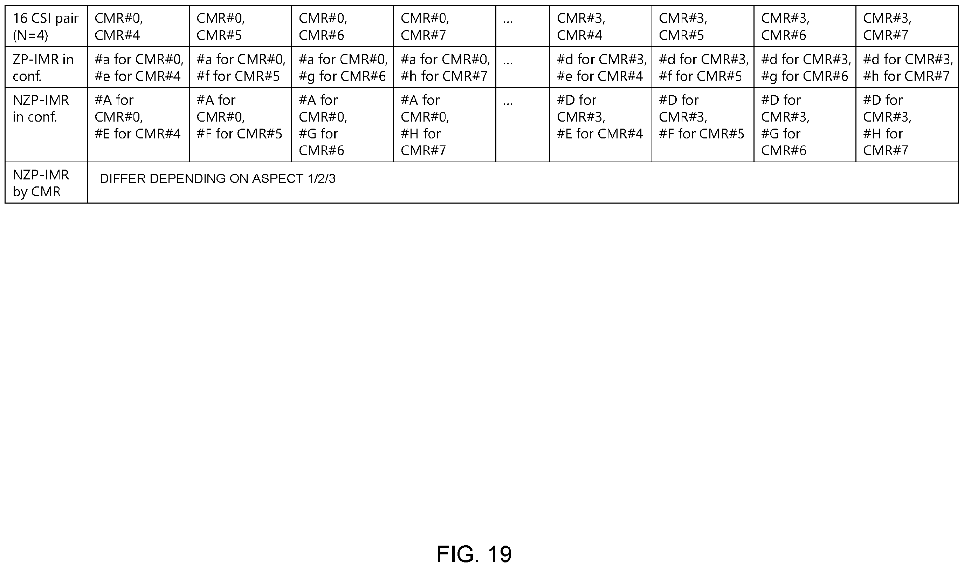

FIG. 19 is a diagram to show a relationship of CSI pairs, ZP-IMRs, and NZP-IMRs in Option 2-4 of the second embodiment. FIG. 19 corresponds to FIG. 18. As shown in FIG. 19, CMRs corresponding to the same ZP-IMR (CSI-IM) and NZP-IM are configured as a CSI pair. FIG. 19 is different from FIG. 15 in that each of the numbers of ZP-IMRs (CSI-IMs) and NZP-IMs for one CSI pair is two.

The UE measures the pieces of CSI of N x N pairs from two TRPs in an NCJT assumption. Each pair includes CMRs associated with all the conceivable combinations of TRPs. For the two pieces of CSI of each pair, the UE assumes the k-th CSI-IM/NZP-IM for interference measurement for the k-th CMR.

For one CSI pair selected for report, the UE may report two CRIs (CRI j (j ≥ 0) and CRI p (p ≥ N)). These two CRIs may correspond to two pieces of CSI including one CSI based on the configured (j + 1)-th CMR and (j + 1)-th CSI-IM/NZP-IM and another CSI based on the configured p-th CMR and p-th CSI-IM/NZP-IM.

According to the second embodiment, mapping between CMRs and ZP-IMRs/NZP-IMRs for two TRPs is made clear for CSI measurement related to a CSI report configuration for NCJT in aperiodic CSI.

### <Third Embodiment>

When applying joint channel status information reporting (joint CSI reporting), the UE receives configuration information (for example, CSI-ReportConfig) corresponding to both application of channel measurement resources (CMRs) for multiple transmission/reception points (multi-TRP) and application of CMRs for one TRP (single TRP), and controls transmission of CSI reporting based on the configuration information. The UE may measure CMR resources measured as CSI pairs for multi-TRP for individual single TRP (Option 3-1). The UE may receive configuration information in which IMRs measured for single TRP and IMRs measured for multi-TRP (CSI-IM/NZP-IMR) are configured independently (separately) and control transmission (generation) of CSI reporting based on the configuration information (Option 3-2).

### {Option 3-1}

If joint CSI reporting is configured, that corresponds to (or includes) the best CSI for multi-TRP and the best CSI/second best CSI from each TRP (two TRPs) for single TRP, CMR resources that the UE measures as the CSI pairs for multi-TRP are measured by the UE for separate single TRP hypothesis (hypothesis. which may also be referred to as premise or assumption.)

In the present disclosure, CSI pair, beam pair may be interchangeably interpreted. Single TRP may mean that only one TRP of the multi-TRP performs transmission to the UE, or the one TRP.

Note that, in the present disclosure, a certain resource (CMR/CSI-IM/NZP-IMR) is configured before another resource (CMR/CSI-IM/NZP-IMR)(for example, a certain resource is configured first) may mean that index of the certain resource is smaller than index of the other resource. A certain resource is configured next (after) another resource may mean that index of the certain resource is larger than index of the other resource.

In CMR resource configuration, the following Option 3-1-1 or Option 3-1-2 is applied to an ordering of CMR resources from the two TRPs.

### {Option 3-1-1}

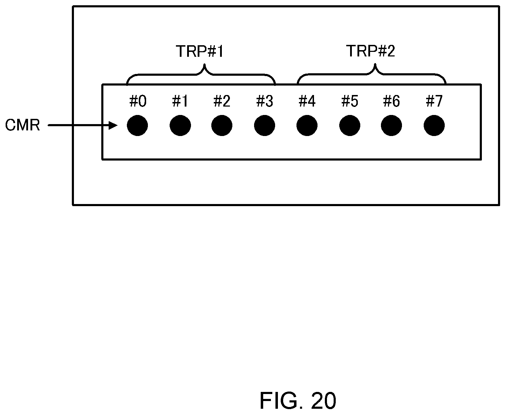

As in the first and second embodiments, CMRs corresponding to TRP #1 may be configured first, and then CMRs corresponding to TRP #2 may be configured. FIG. 20 is a diagram to show a configuration example of CMRs in Option 3-1-1 of the third embodiment. As shown in FIG. 20, CMRs #0 to #3 correspond to TRP #1, and CMRs #4 to #7 correspond to TRP #2. CMRs #0 to #3 and CMRs #4 to #7 may each correspond to four beams (CSI) of one single TRP. Four or sixteen CSI pairs explained in either the first or second embodiments may be configured as CSI pairs for multi-TRP. In other words, CMRs #0 to #7 are used for both single TRP and multi-TRP.

### {Option 3-1-2}

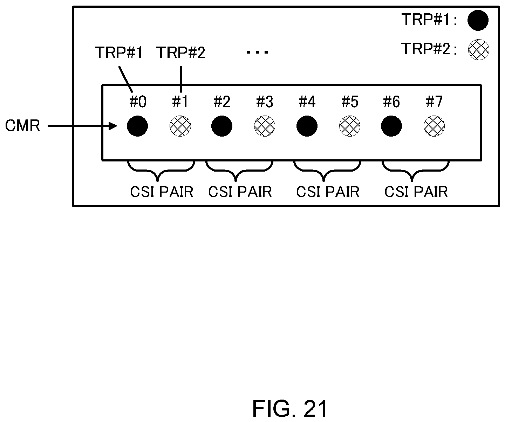

CMRs may be configured for each CSI pair in order. For example, for each CSI pair, TRP #1 may be configured first, and then TRP #2 may be configured. FIG. 21 is a diagram to show a configuration example of CMRs in Option 3-1-2 of the third embodiment. As shown in FIG. 21, CMRs #0, #2, #4, #6 correspond to TRP #1, and CMRs #1, #3, #5, #7 correspond to TRP #2. CMRs #0, #2, #4, #6 and CMRs #1, #3, #5, and #7 may each correspond to four beams (CSI) of one single TRP. As CSI pairs for multi-TRP, a pair of CMRs #0 and #1, a pair of CMRs #2 and #3, a pair of CMRs #4 and #5 and a pair of CMRs #6 and #7 may be configured, respectively. In other words, the CMRs #0 to #7 are used for both single TRP and multi-TRP.

In CRI reporting, an ordering of CRI index for single TRP and CSI index for multi-TRP may be exchanged. The CRI index may be configured, for example, as explained in Option 3-1-3 or Option 3-1-4, or may be defined previously by the specifications as explained in these options.

### {Option 3-1-3}

Reported CRI k (k≥0) means CSI of single TRP based on (k+1)-th CMR resource. A CRI index corresponding to CSI of multi-TRP starts from 2N. N is the number of CMR resources per TRP. In other words, CSIs for single TRP may correspond to CRI indices 0 to 2N-1, and CSIs for multi-TRP may correspond to CRI indices 2N or higher. In addition, as in the first and second embodiments, CRI index j corresponding to multi-TRP corresponds to two CMR resources as CSI pair (for example, (j+l-2N)-th CSI pair).

For example, CRIs #0 to #3 may correspond to TRP #1 (single TRP), CRIs #4 to #7 may correspond to TRP #2 (single TRP), and CRIs #8 to #11 may correspond to the four CSI pairs of the multi-TRP.

### {Option 3-1-4}

CRI k (k ≥ 0) means CSI of multi-TRP with a CSI pair. A CRI index corresponding to single TRP starts from N. In other words, CSIs for multi-TRP may correspond to CRI indices 0 to N-1, and CSIs for multi-TRP may correspond to CRI indices N or higher.

For example, CRIs #0 to #3 may correspond to four CSI pairs for multi-TRP, CRIs #4 to #7 may correspond to TRP #1 (single TRP), and CRIs #8 to #11 may correspond to TRP #2 (single TRP).

### {Option 3-2}

IMR resources for single TRP hypothesis may be additionally configured and may be TRP-specific. The IMR resources for single TRP hypothesis may be different from IMR resources for multi-TRP hypothesis. An ordering of IMR for single TRP and IMR for multi-TRP may be exchanged. A one-to-one mapping between CMR and IMR for single TRP hypothesis is performed, for example, as in the following Option 3-2-1 or Option 3-2-2.

### {Option 3-2-1}

CSI-IMs/NZP-IMRs corresponding to multi-TRP may be configured first, and then CSI-IMs/NZP-IMRs corresponding to single TRP may be configured. In addition, for CSI-IMs/NZP-IMRs, TRP #1 may be configured first, and then TRP #2 may be configured.

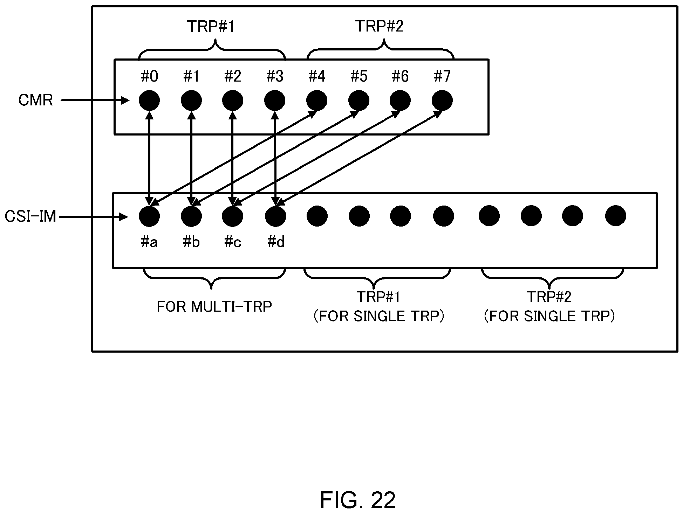

FIG. 22 is a diagram to show a configuration example of CMRs/CSI-IMs in Option 3-2-1 of the third embodiment. FIG. 22 assumes Option 1-1 in the first embodiment. The same as in Option 1-1 are omitted. In FIG. 22, in configuration of CSI-IMs, CSI-IMs corresponding to multi-TRP are configured first, next CSI-IMs corresponding to TRP #1 (for single TRP) are configured, and then the CSI-IMs corresponding to TRP #2 (for single TRP) are configured. Note that, a configuration of NZP-IMRs may be the same as the configuration of CSI-IMs.

### {Option 3-2-2}

CSI-IMs/NZP-IMRs corresponding to single TRP may be configured first, and then CSI-IMs/NZP-IMRs corresponding to multi-TRP may be configured. In addition, for CSI-IMs/NZP-IMRs, TRP #1 may be configured first, and then TRP #2 may be configured.

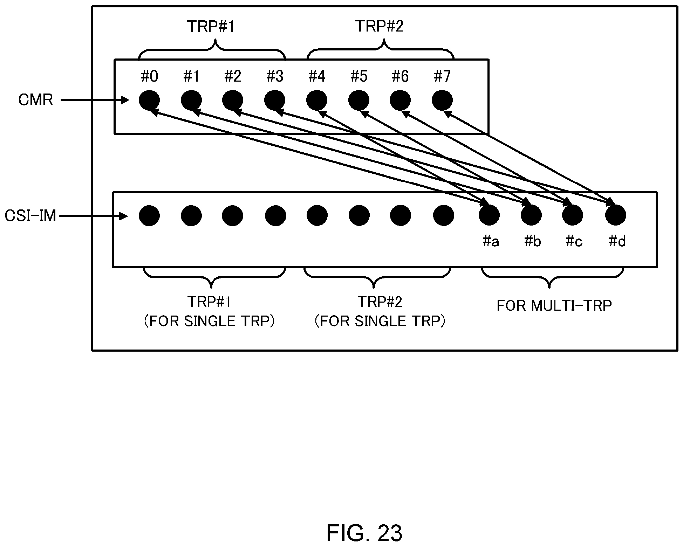

FIG. 23 is a diagram to show a configuration example of CMRs/CSI-IMs in Option 3-2-2 of the third embodiment. FIG. 23 assumes Option 1-1 in the first embodiment. The same as in Option 1-1 are omitted. In FIG. 23, in configuration of CSI-IMs, CSI-IMs corresponding to TRP #1 (for single TRP) is configured first, next CSI-IMs corresponding to TRP #2 (for single TRP) is configured, and then CSI-IMs corresponding to multi-TRP is configured. Note that, a configuration of NZP-IMRs may be the same as the configuration of CSI-IMs.

Option 3-2-1 and Option 3-2-2 assume Option 1-1 in the first embodiment, but may assume other Options in the first and second embodiments.

According to the third embodiment, joint method of the measurement/reporting in multi-panel/TRP hypothesis and the measurement/reporting in single-panel/TRP hypothesis is made clear. In addition, the number of configurations can be reduced and throughput can be improved, since one CMR can be applied to both multi-panel and single-panel.

### <Forth Embodiment>

When applying joint channel status information reporting (joint CSI reporting), the UE receives configuration information corresponding to both application of channel measurement resources (CMR) for multiple transmission/reception points (multi-TRP) and application of CMRs for one TRP (single TRP), and controls transmission of CSI reporting based on the configuration information. In the configuration information, CMR resources measured for single TRP and CMR resources measured as CSI pairs for multi-TRP are configured independently (separately) (Option 4-1). The UE may receive configuration information in which IMRs measured for single TRP and IMRs measured for multi-TRP (CSI-IM/NZP-IMR) are configured independently (separately) and control transmission (generation) of CSI reporting based on the configuration information (Option 4-2).

### {Option 4-1}

If joint CSI reporting is configured, that corresponds to (or includes) the best CSI for multi-TRP and the best CSI/second best CSI from each TRP (two TRPs) for single TRP, CMR resources measured by the UE in a case of single TRP hypothesis may be configured independently from CMR resources measured by the UE as the CSI pair for multi-TRP hypothesis.

In CMR resource configuration, an ordering of CMRs for single TRP and CMRs for multi-TRP may be exchanged.

### {Option 4-1-1}

The CMRs for multi-TRP (N beam pairs) may be configured first, and then the CMRs for single TRP (M CMRs per TRP) may be configured. M and N may be configured, for example, by higher layer signaling.

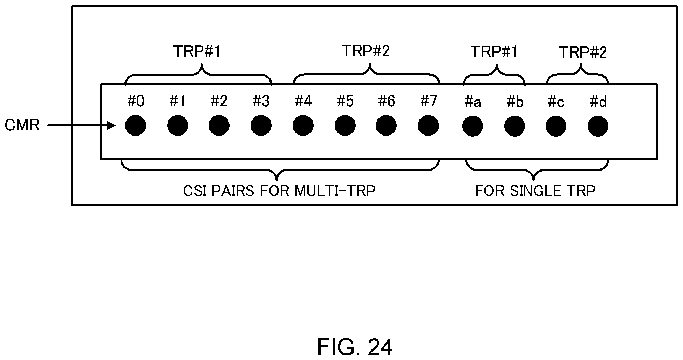

FIG. 24 is a diagram to show a first configuration example of CMRs in Option 4-1-1 of the fourth embodiment. As shown in FIG. 24, CMRs #0 to #3 correspond to TRP #1 (for multi-TRP) and CMRs #4 to #7 correspond to TRP #2 (for multi-TRP). Four or sixteen CSI pairs explained in either Options of the first/second embodiments may be configured as CSI pairs for multi-TRP. Next, CMRs #a and #b corresponding to two beams (CSIs) of TRP #1 (for single TRP) are configured, and then CMRs #c and #d corresponding to two beams (CSIs) of TRP #2 (for single TRP) are configured.

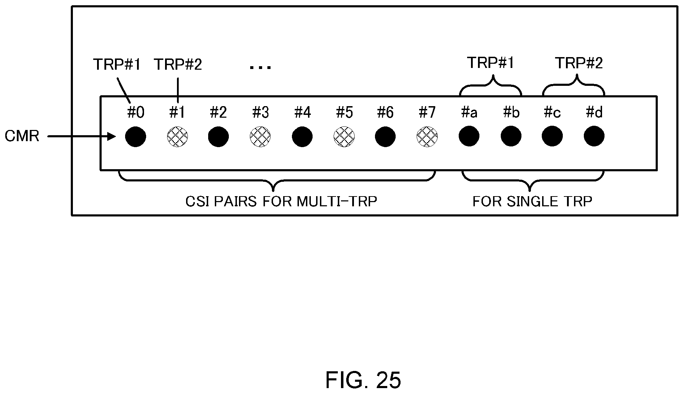

FIG. 25 is a diagram to show a second configuration of CMRs in Option 4-1-1 of the fourth embodiment. As shown in FIG. 25, CMRs #0, #2, #4, and #6 correspond to TRP #1 (for multi-TRP), and CMRs #1, #3, #5, and #7 correspond to TRP #2 (for multi-TRP). As CSI pairs for multi-TRP, a pair of CMRs #0 and #1, a pair of CMRs #2 and #3, a pair of CMRs #4 and #5 and a pair of CMRs #6 and #7 may be configured, respectively. Next, CMRs #a and #b corresponding to two beams (CSIs) of TRP #1 (for single TRP) are configured, and then CMRs #c and #d corresponding to two beams (CSIs) of TRP #2 (for single TRP) are configured.

### {Option 4-1-2}

The CMRs for single TRP (M CMRs per TRP) are configured first, and then the CMRs for multi-TRP (N beam pairs) are configured. M and N may be configured, for example, by higher layer signaling.

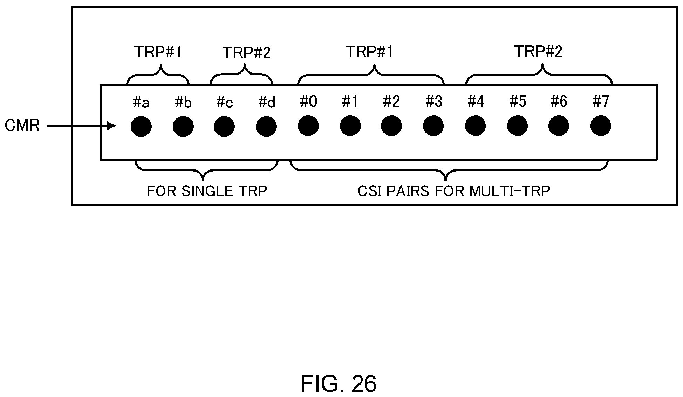

FIG. 26 is a diagram to show a first configuration example of CMRs in Option 4-1-2 of the fourth embodiment. FIG. 26 is the same as the example in FIG. 24 except that the ordering of CMRs #0 to #7 (for multi-TRP) and CMRs #a to #d (for single TRP) is exchanged, and thus a detailed explanation is omitted.

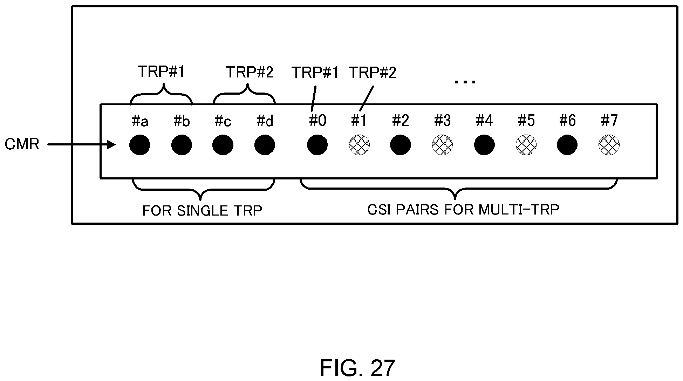

FIG. 27 is a diagram to show a second configuration example of CMRs in Option 4-1-2 of the fourth embodiment. FIG. 27 is the same as the example in FIG. 25 except that the ordering of CMRs #0 to #7 (for multi-TRP) and CMRs #a to #d (for single TRP) is exchanged, and thus a detailed explanation is omitted.

In CRI reporting, an ordering of CRI index for single TRP and CSI index for multi-TRP may be exchanged. The CRI index may be configured, for example, as explained in following Option 4-1-3 or Option 4-1-4, or may be defined previously by the specifications as explained in these options.

### {Option 4-1-3}

CRI k (k≥0) corresponds to (k+1)-th CSI pair. CRI for TRP #1 starts from 2N and CRI for TRP #2 starts from 2N+M. N is the number of CMR resources per TRP. In other words, CSIs for multi-TRP may correspond to CRI indices 0 to N-1, and CSIs for single TRP may correspond to CRI indices 2N or higher.

### {Option 4-1-4}

CRI k (k≥0) corresponds to TRP #1 (single TRP), CRI for TRP #2 (single TRP) starts from M, and CRI for multi-TRP starts from 2M. In other words, CSIs for single TRP may correspond to CRI indices 0 to M-1, and CSIs for multi-TRP may correspond to CRI indices 2M or higher.

### {Option 4-2}

IMR resources for single TRP hypothesis may be additionally configured and may be TRP-specific. The IMR resources for single TRP hypothesis may be different from IMR resources for multi-TRP hypothesis. An ordering of IMR for single TRP and IMR for multi-TRP may be exchanged. However, an ordering of IMR resources is the same as an ordering of CMRs corresponding to single TRP and multi-TRP. A one-to-one mapping between CMR and IMR for single TRP hypothesis is performed, for example, as in the following Option 4-2-1 or Option 4-2-2.

### {Option 4-2-1}

CSI-IMs/NZP-IMRs corresponding to multi-TRP may be configured first, and then CSI-IMs/NZP-IMRs corresponding to single TRP may be configured. In addition, for CSI-IMs/NZP-IMRs, TRP #1 may be configured first, and then TRP #2 may be configured.

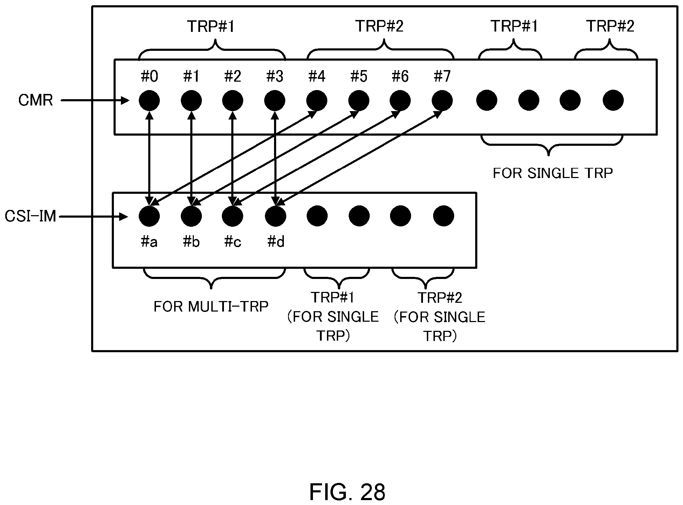

FIG. 28 is a diagram to show a configuration example of CMRs/CSI-IMs in Option 4-2-1 of the fourth embodiment. FIG. 28 assumes Option 1-1 in the first Embodiment. The same as in Option 1-1 are omitted. In FIG. 28, a configuration of CRMs is the same as in FIG. 24. In the configuration of CSI-IMs, CSI-IMs corresponding to multi-TRP are configured first, next CSI-IMs corresponding to TRP #1 (for single TRP) are configured, and then CSI-IMs corresponding to TRP #2 (for single TRP) are configured. Note that, a configuration of NZP-IMRs may be the same as the configuration of CSI-IMs.

### {Option 4-2-2}

CSI-IMs/NZP-IMRs corresponding to single TRP may be configured first, and then CSI-IMs/NZP-IMRs corresponding to multi-TRP may be configured. In addition, for CSI-IMs/NZP-IMRs, TRP #1 may be configured first, and then TRP #2 may be configured.

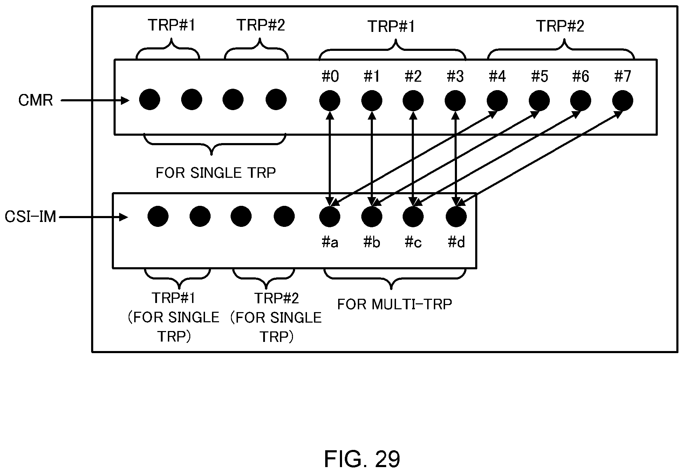

FIG. 29 is a diagram to show a configuration example of CMRs/CSI-IMs in Option 4-2-2 of the fourth embodiment. FIG. 29 assumes Option 1-1 of the first embodiment. The same as in Option 1-1 are omitted. In FIG. 29, a configuration of CRMs is the same as in FIG. 26. In the configuration of CSI-IMs, CSI-IMs corresponding to TRP #1 (for single TRP) are configured first, next CSI-IMs corresponding to TRP #2 (for single TRP) are configured, and then CSI-IMs corresponding to multi-TRP are configured. Note that, a configuration of NZP-IMRs may be the same as the configuration of CSI-IMs.

Option 4-2-1 and Option 4-2-2 assume Option 1-1 in the first embodiment, but may assume other Options in the first and second embodiments.

According to the third embodiment, joint method of the measurement/reporting in multi-panel/TRP hypothesis and the measurement/reporting in single-panel/TRP hypothesis is made clear.

### <Fifth Embodiment>

If joint CSI reporting is configured, that corresponds to (or includes) the best CSI for multi-TRP and the best CSI/second best CSI from each TRP (two TRPs) for single TRP, CMR resources that the UE measures as the CSI pairs for multi-TRP are measured by the UE for separate single TRP hypothesis (hypothesis. which may also be referred to as premise or assumption.)

The UE may also assume, for IMR resources, both hypothesis for multi-TRP and hypothesis for single TRP. In other words, the IMR resources may be used for both measurement for multi-TRP and measurement for single TRP in common. Independent CMR/IMR configurations are not performed for single TRP and multi-TRP. However, the UE measurement operations of single TRP and multi-TRP is different. In this embodiment, the example in Option 3-1 may be applied for configuration for CMR resources and CRI reporting. The following Options 5-1 and 5-2 may be applied for an assumption for measurement of IMRs.

### {Option 5-1}

The UE may assume that CSI-IM (ZP-IMR) means interference outside both TRPs (interference from outside both TRPs). This corresponds to interference for multi-TRP hypothesis. When the UE derives CSIs for single TRP, the UE may re-calculate interference from other TRPs and add it to interference from other than both TRPs above and to use it.

### {Option 5-2}

The UE may assume that CSI-IMs (ZP-IMRs) associated with each TRP implies interference outside corresponding to TRP (interference from outside the corresponding to TRP). This corresponds to interference for single TRP hypothesis. When the UE derives CSIs for multi-TRP, the UE may then re-calculate interference from other TRPs and subtract it from interference from other than the corresponding to TRP above.

### <UE Capability>

The UE may transmit (report) at least one of (1) to (11) below as UE capability (UE capability information) to the base station.

(1) Whether to support CMRs from different TRPs in a CSI configuration.
(2) Whether to support CSI-IM resources (ZP-IMRs) / NZP-CSI-RS resources (NZP-IMRs) for interference measurement for different TRPs in a CSI configuration.
(3) Whether to support one or two CRIs for a CSI pair having two CSIs for MTRP NCJT CSI report.
(4) Whether to support interference measurement for one TRP based on the CMR from the other TRP in periodic/semi-persistent/aperiodic CSI.
(5) Whether to support that calculated precoding to be applied to a CMR is assumed when the UE measures interference, based on the CMR.
(6) Whether to support reporting of both one best CSI for single TRP and one best CSI for multi-TRP in a CSI reporting.
(7) Whether to support reporting of two best CSIs for single TRP (one CSI per TRP) and one best CSI for multi-TRP in CSI reporting.
(8) Whether to support reporting of two best CSIs for single TRP (one CSI per TRP) in CSI reporting.
(9) Whether to support reporting of one CSI (selected by the UE) from the best CSI for single TRP and the best CSI for multi-TRP in CSI reporting.
(10) Whether to support independent/separate CMR resource configurations for single TRP hypothesis and multi-TRP hypothesis.
(11) Whether to support independent/separate IMR (CSI-IM / NZP-IM) resource configurations for both single TRP hypothesis and multi-TRP hypothesis.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

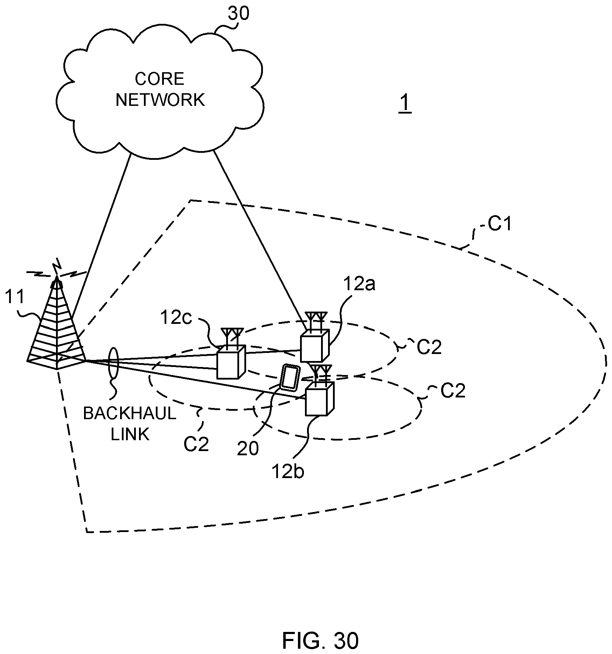

FIG. 30 is a diagram to show an example of a schematic structure of the radio communication system according to one embodiment. The radio communication system 1 may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be also referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be also referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

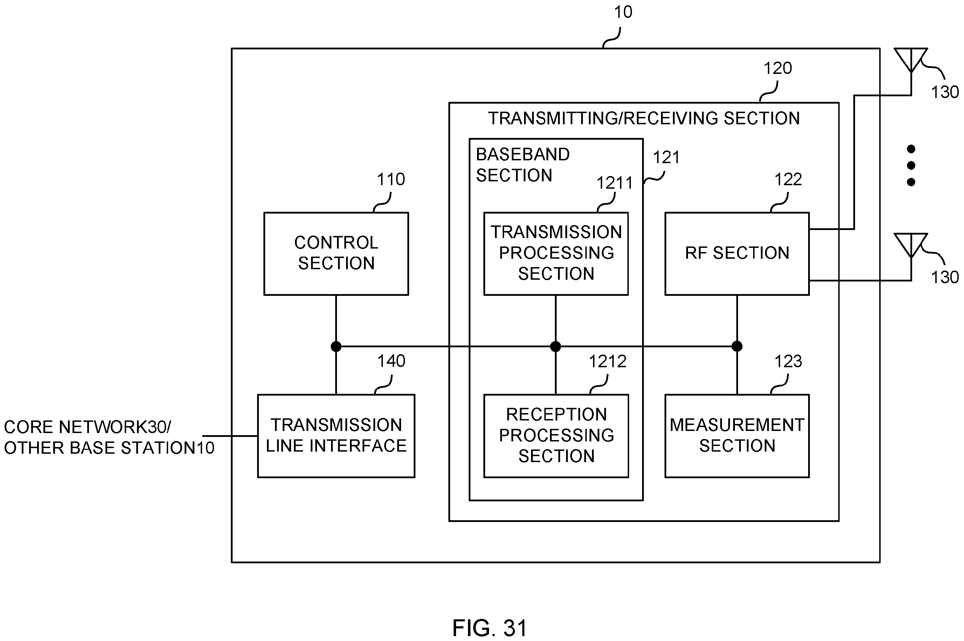

FIG. 31 is a diagram to show an example of a structure of the base station according to one embodiment. The base station 10 includes a control section 110, a transmitting/receiving section 120, transmitting/receiving antennas 130 and a transmission line interface 140. Note that the base station 10 may include one or more control sections 110, one or more transmitting/receiving sections 120, one or more transmitting/receiving antennas 130, and one or more transmission line interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the transmission line interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, demapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The transmission line interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the transmission line interface 140.

Note that the transmitting/receiving section 120 may transmit, when joint channel status information reporting is applied, configuration information corresponding to both an application of channel measurement resources for multiple transmission/reception points and an application of channel measurement resources for single transmission/reception point, and receive a channel state information reporting transmitted based on the configuration information.

### (User Terminal)

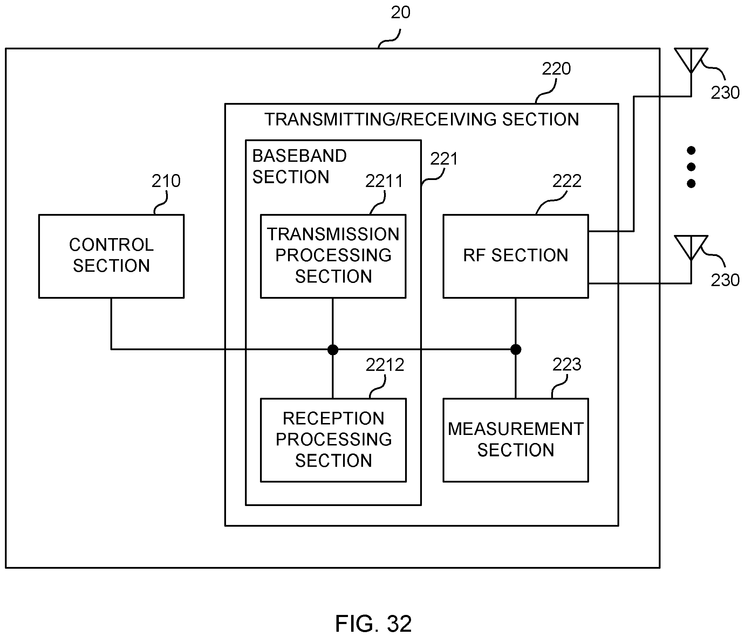

FIG. 32 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission process.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply a receiving process such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

The control section 210 may determine a first resource for interference measurement corresponding to a first transmission/reception point or a second resource for interference measurement corresponding to a second transmission/reception point, based on at least one of a first resource for channel measurement corresponding to the first transmission/reception point and a second resource for channel measurement corresponding to the second transmission/reception point. The control section 210 may determine the first resource for interference measurement with non-zero power, based on the second resource for channel measurement when a specific higher layer parameter is configured.

The transmitting/receiving section 220 may receive, when joint channel status information reporting is applied, configuration information corresponding to both an application of channel measurement resources for multiple transmission/reception points and an application of channel measurement resources for single transmission/reception point.

The control section 210 may control transmission of a channel state information reporting based on the configuration information. The control section 210 may measure channel measurement resources measured as a channel state information pair for the multiple transmission/reception points for the single transmission/reception point.

In the configuration information, channel measurement resources measured for the single transmission/reception point and channel measurement resources measured as channel state information pairs for the multiple transmission/reception points are configured independently.

In the configuration information, interference measurement resources measured for the single transmission/reception point and interference measurement resources measured as channel state information pairs for the multiple transmission/reception points are configured independently.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

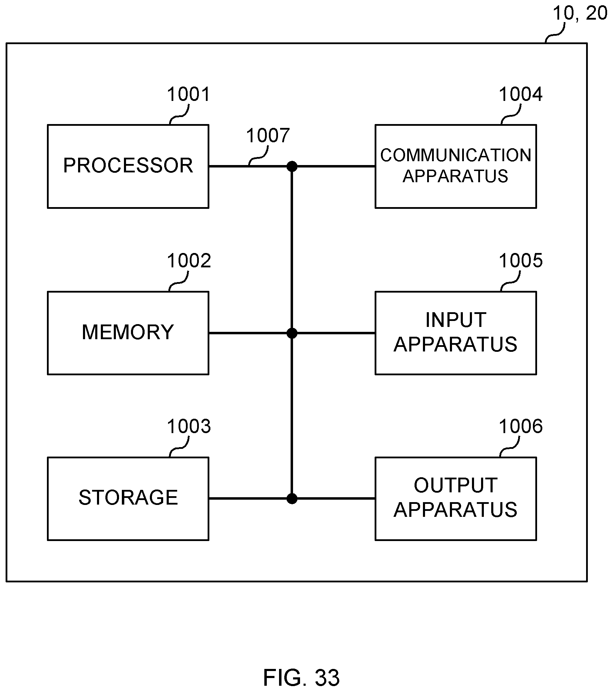

For example, a base station, a user terminal, and so on according to one embodiment of the present disclosure may function as a computer that executes the processes of the radio communication method of the present disclosure. FIG. 33 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

### (Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a particular filter processing performed by a transceiver in the frequency domain, a particular windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE does not need to assume to transmit/receive a certain signal/channel outside active BWPs. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to certain values, or may be represented in another corresponding information. For example, radio resources may be specified by certain indices.

The names used for parameters and so on in the present disclosure are in no respect limiting. Furthermore, mathematical expressions that use these parameters, and so on may be different from those expressly disclosed in the present disclosure. For example, since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in the present disclosure, and other methods may be used as well. For example, reporting of information in the present disclosure may be implemented by using physical layer signaling (for example, downlink control information (DCI), uplink control information (UCI), higher layer signaling (for example, Radio Resource Control (RRC) signaling, broadcast information (master information block (MIB), system information blocks (SIBs), and so on), Medium Access Control (MAC) signaling and so on), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be reported using, for example, MAC control elements (MAC CEs).

Also, reporting of certain information (for example, reporting of "X holds") does not necessarily have to be reported explicitly, and can be reported implicitly (by, for example, not reporting this certain information or reporting another piece of information).

Determinations may be made in values represented by one bit (0 or 1), may be made in Boolean values that represent true or false, or may be made by comparing numerical values (for example, comparison against a certain value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be device mounted on a moving object or a moving object itself, and so on. The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor, and the like.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words "uplink" and "downlink" may be interpreted as the words corresponding to the terminal-to-terminal communication (for example, "sidelink"). For example, an uplink channel, a downlink channel, and so on may be interpreted as a sidelink channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG) (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced based on these. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B is each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

## Claims

1. A terminal comprising:
a receiving section that receives, when joint channel status information reporting is applied, configuration information corresponding to both an application of channel measurement resources for multiple transmission/reception points and an application of channel measurement resources for single transmission/reception point; and
a control section that controls transmission of a channel state information reporting based on the configuration information.

2. The terminal according to claim 1, wherein
the control section measures channel measurement resources measured as a channel state information pair for the multiple transmission/reception points for the single transmission/reception point.

3. The terminal according to claim 1, wherein
channel measurement resources measured for the single transmission/reception point and channel measurement resources measured as channel state information pairs for the multiple transmission/reception points are configured independently in the configuration information.

4. The terminal according to any one of claims 1 to 3, wherein
interference measurement resources measured for the single transmission/reception point and interference measurement resources measured for the multiple transmission/reception points are configured independently in the configuration information, and
wherein the control section controls the transmission of the channel state information reporting based on the configuration information.

5. A radio communication method for a terminal, the radio communication method comprising:
receiving, when joint channel status information reporting is applied, configuration information corresponding to both an application of channel measurement resources for multiple transmission/reception points and an application of channel measurement resources for single transmission/reception point; and
controlling transmission of a channel state information reporting based on the configuration information.

6. A base station comprising:
a transmitting section that transmits, when joint channel status information reporting is applied, configuration information corresponding to both an application of channel measurement resources for multiple transmission/reception points and an application of channel measurement resources for single transmission/reception point; and
a receiving section that receives a channel state information reporting transmitted based on the configuration information.
